# EUROPEAN PATENT APPLICATION

(11) **EP 4 701 098 A1**
(43) Date of publication of application: **25.02.2026**
(21) Application number: 24844338.4
(22) Date of filing: 16.05.2024
(51) Int. Cl.: H04B 7/185, H04W 48/08

(54) **COMMUNICATION METHOD AND COMMUNICATION APPARATUS**

(30) Priority: 26.07.2023 CN 202310930324
(71) Applicant: Huawei Technologies Co., Ltd., Shenzhen, Guangdong 518129 (CN)
(72) Inventor: LI, Yongcui, Shenzhen, Guangdong 518129 (CN); PAN, Qi, Shenzhen, Guangdong 518129 (CN)
(74) Representative: Gill Jennings & Every LLP
(86) International application number: PCT/CN2024/093596
(87) International publication number: WO 2025/020642

(57) **Abstract**

This application provides a communication method and a communication apparatus. The method includes: In a satellite communication scenario, a terminal device obtains unavailability period information, where the unavailability period information indicates a period in which a reference point is in unavailability of a satellite. Further, the terminal device determines a period of a first timer based on the unavailability period information, where the first timer is used by the terminal device to send a message to a core network device through the satellite. According to the method, when determining the period of the first timer, the terminal device can consider the period in which the reference point is in the unavailability of the satellite, to avoid an inappropriate specified period of the timer, and improve performance of sending the message to the core network device by the terminal device through the satellite.

## Description

This application claims priority to Chinese Patent Application No. 202310930324.4, filed with the China National Intellectual Property Administration on July 26, 2023 and entitled "COMMUNICATION METHOD AND COMMUNICATION APPARATUS", which is incorporated herein by reference in its entirety.

### TECHNICAL FIELD

This application relates to the communication field, and more specifically, to a communication method and a communication apparatus.

### BACKGROUND

When a terminal device sends a connection establishment request message to a core network device through a satellite, the terminal device starts a timer. If the terminal device receives a response message of the core network device when the timer does not time out, the terminal device stops the timer; or if the terminal device does not receive a response message of the core network device when the timer times out, the terminal device terminates a connection establishment procedure with the core network device.

In a scenario in which the satellite serves as an access network device, a connection between the terminal device and the core network device includes a connection between the terminal device and the satellite (referred to as an access connection) and a connection between the satellite and a ground gateway station (referred to as a feeder link). Due to mobility of the satellite, the access connection and the feeder link may be discontinuous, in other words, there may be unavailability of the connections. Consequently, a period of signaling exchange between the terminal device and the core network device is affected. The unavailability period of the access connection and the unavailability period of the feeder link may be collectively referred to as unavailability periods.

In the foregoing case, if the terminal device still determines, based on a period of the timer, whether to stop the timer or terminate the connection establishment procedure with the core network device, the determining is inaccurate. Therefore, when the unavailability exists, how to appropriately set the period of the timer becomes an urgent problem to be resolved.

### SUMMARY

This application provides a communication method, so that a period of a timer can be appropriately set when there is unavailability. Therefore, a terminal device can more accurately determine a status of message transmission between the terminal device and a core network device based on the timer.

According to a first aspect, a communication method is provided. The method may be performed by a terminal device, or may be performed by a component (for example, a chip or a circuit) of the terminal device. This is not limited herein.

The method may include: obtaining unavailability period information, where the unavailability period information indicates a period in which a reference point is in unavailability of a satellite; and determining a period of a first timer based on the unavailability period information, where the first timer is used by the terminal device to send a message to a core network device through the satellite.

According to the foregoing technical solution, before sending the message to the core network device through the satellite, the terminal device obtains the unavailability period information, and obtains, based on the unavailability period information, the period in which the reference point is in the unavailability of the satellite. In addition, when the period of the first timer is set, the period in which the reference point is in the unavailability of the satellite is considered, so that the terminal device can determine, based on the first timer, whether sending of the message to the core network device through the satellite succeeds or fails, to improve determining accuracy of the terminal device.

With reference to the first aspect, in some implementations of the first aspect, the reference point includes a first reference point and a second reference point; and the unavailability period information includes information about a first period and information about a second period, the first period is an unavailability period of an access connection corresponding to the first reference point, and the second period is an unavailability period of a feeder link corresponding to the second reference point; or the unavailability period information includes information about a sum of an unavailability period of an access connection corresponding to the first reference point and an unavailability period of a feeder link corresponding to the second reference point.

According to the foregoing technical solution, an unavailability period obtained by the terminal device includes two parts of periods: one part is the unavailability period of the access connection, and the other part is the unavailability period of the feeder link. In a scenario in which the terminal device communicates with the core network device through the satellite, unavailability of the access connection and unavailability of the feeder link may occur. In this technical solution, when determining the period of the first timer, the terminal device can set the period of the first timer to be more appropriate for the satellite communication scenario in comprehensive consideration of the unavailability period of the access connection and the unavailability period of the feeder link.

With reference to the first aspect, in some implementations of the first aspect, the determining the period of the first timer based on the unavailability period information includes: determining the period of the first timer based on a preset period of the first timer, the information about the first period, and the information about the second period.

With reference to the first aspect, in some implementations of the first aspect, the period of the first timer is longer than or equal to a sum of the preset period of the first timer, the first period, and the second period.

According to the foregoing technical solution, the period that is of the first timer and that is determined by the terminal device is longer than or equal to the sum of the preset period of the first timer, the first period, and the second period. In other words, the period that is of the first timer and that is determined by the terminal device is longer than the preset period of the first timer, and a message transmission status between the terminal device and the core network device is not determined based on the preset period of the first timer, so that performance of sending the message to the core network device by the terminal device through the satellite is improved.

With reference to the first aspect, in some implementations of the first aspect, the first reference point and the second reference point are the same, or the first reference point and the second reference point are different.

According to the foregoing technical solution, the first reference point and the second reference point may be the same or different. This is not limited in the technical solution, and flexibility of the solution is improved.

With reference to the first aspect, in some implementations of the first aspect, the first reference point includes at least one of the following: a location of the terminal device, a location of a first gateway station, an area in which the first gateway station is located, or an area in which the terminal device is located; and the second reference point includes at least one of the following: the location of the terminal device, the location of the first gateway station, the area in which the first gateway station is located, or the area in which the terminal device is located. The first gateway station may be a gateway station specified in at least one gateway station deployed in a satellite constellation, and the location of the first gateway station or the area in which the first gateway station is located may be preconfigured.

According to the foregoing technical solution, there may be a plurality of specific forms of the first reference point and/or the second reference point. For example, a specific representation form of the first reference point may be the location of the terminal device that currently determines the period of the first timer or the area in which the terminal device that currently determines the period of the first timer is located, or the location of the first gateway station or the area in which the first gateway station is located. For another example, a specific implementation form of the second reference point may be the location of the terminal device that currently determines the period of the first timer or the area in which the terminal device that currently determines the period of the first timer is located, or the location of the first gateway station or the area in which the first gateway station is located. Therefore, the first reference point and/or the second reference point may be indicated in different manners, so that the flexibility of the solution is improved.

With reference to the first aspect, in some implementations of the first aspect, the obtaining the unavailability period information includes: receiving the unavailability period information from an access network device of the terminal device.

According to the foregoing technical solution, a manner in which the terminal device obtains the unavailability period information may be directly receiving the unavailability period information from the access network device, without needing to perform calculation. Therefore, complexity of the terminal device is reduced.

With reference to the first aspect, in some implementations of the first aspect, the receiving the unavailability period information from the access network device of the terminal device includes: receiving a broadcast message from the access network device, where the broadcast message includes the unavailability period information; and receiving a radio connection resource RRC reconfiguration message from the access network device, where the RRC reconfiguration message includes the unavailability period information.

According to the foregoing technical solution, the access network device may provide the unavailability period information to the terminal device in a broadcast manner or by using the RRC reconfiguration message, in other words, the access network device may provide the unavailability period information to the terminal device in different manners, to improve the flexibility of the solution.

With reference to the first aspect, in some implementations of the first aspect, the obtaining the unavailability period information includes: determining the unavailability period information based on ephemeris information. The ephemeris information includes conventional ephemeris information and gateway station deployment information, the conventional ephemeris information indicates a satellite running location, and the gateway station deployment information indicates a location of at least one gateway station deployed in the satellite constellation. Alternatively, the ephemeris information includes satellite availability information, and the satellite availability information refers to a satellite availability status that changes with time and a location.

According to the foregoing technical solution, a manner in which the terminal device obtains the unavailability period information may be that the terminal device determines the unavailability period information based on the ephemeris information, and the access network device does not need to determine the unavailability period information. Therefore, complexity of the access network device is reduced.

With reference to the first aspect, in some implementations of the first aspect, the determining the unavailability period information based on the ephemeris information includes: determining the information about the first period and the information about the second period based on the ephemeris information, where the first period is the unavailability period of the access connection corresponding to the first reference point, and the second period is the unavailability period of the feeder link corresponding to the second reference point, where the unavailability period information includes the information about the first period and the information about the second period.

According to the foregoing technical solution, when determining the unavailability period information based on the ephemeris information, the terminal device determines the information about the first period based on the ephemeris information (for example, based on the conventional ephemeris information or the satellite availability information in the ephemeris information), and determines the information about the second period based on the ephemeris information (for example, based on the conventional ephemeris information and the gateway station deployment information in the ephemeris information). Both the unavailability period of the access connection and the unavailability period of the feeder link are considered, so that a more appropriate period of the first timer can be set for the satellite communication scenario.

With reference to the first aspect, in some implementations of the first aspect, the obtaining the unavailability period information includes: receiving the information about the second period from an access network device of the terminal device, where the second period is the unavailability period of the feeder link corresponding to the second reference point; and determining the information about the first period based on ephemeris information (for example, based on conventional ephemeris information or satellite availability information in the ephemeris information), where the first period is the unavailability period of the access connection corresponding to the first reference point, and the unavailability period information includes the information about the first period and the information about the second period.

With reference to the first aspect, in some implementations of the first aspect, the obtaining the unavailability period information includes: receiving the information about the first period from an access network device of the terminal device, where the first period is the unavailability period of the access connection corresponding to the first reference point; and determining the information about the second period based on ephemeris information (for example, based on conventional ephemeris information and gateway station deployment information, or satellite availability information in the ephemeris information), where the second period is the unavailability period of the feeder link corresponding to the second reference point, and the unavailability period information includes the information about the first period and the information about the second period.

According to the foregoing technical solution, a manner in which the terminal device obtains the unavailability period information may be that the terminal device determines the information about the first period or the information about the second period in the unavailability period information based on the ephemeris information, and receives, from the access network device, the information about the second period or the information about the first period that is not determined. In this technical solution, both the terminal device and the access network device may calculate information about a partial period in the unavailability period information based on the ephemeris information, and the terminal device and the access network device collaborate to determine the unavailability period information. This avoids a problem that complexity of a single device is high when the terminal device or the access network device separately determines the unavailability period information.

With reference to the first aspect, in some implementations of the first aspect, the determining the information about the first period based on the ephemeris information includes: determining, based on the ephemeris information (for example, based on the conventional ephemeris information or the satellite availability information in the ephemeris information), one or more unavailability periods of one or more access connections corresponding to at least one reference point; and determining, based on the one or more unavailability periods of the one or more access connections corresponding to the at least one reference point, that the information about the first period is information about the unavailability period of the access connection corresponding to the first reference point, where the unavailability period of the access connection corresponding to the first reference point is a longest period of the one or more unavailability periods of the one or more access connections corresponding to the at least one reference point.

According to the foregoing technical solution, that the terminal device determines the information about the first period based on the ephemeris information may be that the terminal device determines, based on the ephemeris information, the one or more unavailability periods of the one or more access connections corresponding to the at least one reference point, and uses the longest period of the one or more unavailability periods of the one or more access connections corresponding to the at least one reference point as the first period. Therefore, the determined information about the first period can meet requirements of different reference points to the greatest extent.

With reference to the first aspect, in some implementations of the first aspect, the determining the information about the second period based on the ephemeris information includes: determining, based on the ephemeris information (for example, based on the conventional ephemeris information and the gateway station deployment information, or the satellite availability information in the ephemeris information), one or more unavailability periods of one or more feeder links corresponding to at least one reference point; and determining, based on the one or more unavailability periods of the one or more feeder links corresponding to the at least one reference point, that the information about the second period is information about the unavailability period of the feeder link corresponding to the second reference point, where the unavailability period of the feeder link corresponding to the second reference point is a longest period of the one or more unavailability periods of one or more feeder links corresponding to the at least one reference point.

According to the foregoing technical solution, that the terminal device determines the information about the second period based on the ephemeris information may be that the terminal device determines, based on the ephemeris information, the one or more unavailability periods of the one or more feeder links corresponding to the at least one reference point, and uses the longest period of the one or more unavailability periods of the one or more feeder links corresponding to the at least one reference point as the second period. Therefore, the determined information about the second period can meet requirements of different reference points to the greatest extent.

With reference to the first aspect, in some implementations of the first aspect, the method further includes: receiving the ephemeris information from the access network device of the terminal device; receiving the ephemeris information from the core network device; or obtaining the ephemeris information through a user plane.

According to the foregoing technical solution, a manner in which the terminal device obtains the ephemeris information includes but is not limited to the following possible manners: receiving the ephemeris information from the access network device and/or the core network device, or obtaining the ephemeris information through the user plane, to improve the flexibility of the solution.

With reference to the first aspect, in some implementations of the first aspect, the receiving the ephemeris information from the access network device includes: receiving a broadcast message from the access network device of the terminal device, where the broadcast message includes the ephemeris information; or receiving a radio connection resource RRC reconfiguration message from the access network device of the terminal device, where the RRC reconfiguration message includes the ephemeris information.

According to the foregoing technical solution, the access network device may provide the ephemeris information to the terminal device in a broadcast manner or by using the RRC reconfiguration message, in other words, the access network device may provide the ephemeris information to the terminal device in different manners, to improve the flexibility of the solution.

With reference to the first aspect, in some implementations of the first aspect, before the determining the period of the first timer based on the unavailability period information, the method further includes: receiving first indication information from the access network device of the terminal device, where the first indication information indicates the terminal device to determine the period of the first timer based on the unavailability period, or indicates that the terminal device is in a discontinuous availability scenario.

According to the foregoing technical solution, the terminal device may determine, based on the received first indication information, that the unavailability period needs to be considered when the period of the first timer is set, so that the terminal device can determine, based on the explicit indication information, a manner of setting the period of the first timer, to prevent the terminal device from still considering the unavailability period in a scenario in which the terminal device does not need to consider the unavailability period.

With reference to the first aspect, in some implementations of the first aspect, the method further includes: when the terminal device sends a first request message to the core network device through the satellite, starting the first timer, where the first request message is used to request to establish a connection to the core network device; and if a first response message in response to the first request message is received from the core network device before the first timer times out, stopping the first timer; and/or if the first response message in response to the first request message is still not received from the core network device when the first timer times out, terminating the establishment of the connection to the core network device.

With reference to the first aspect, in some implementations of the first aspect, the first request message is a registration request message, and the first response message is a registration accept message; or the first request message is a service request message, and the first response message is a service accept message.

According to a second aspect, a communication method is provided. The method may be performed by an access network device, or may be performed by a component (for example, a chip or a circuit) of the access network device. This is not limited.

The method may include: determining unavailability period information based on ephemeris information, where the unavailability period information indicates a period in which a reference point is in unavailability of a satellite; and sending the unavailability period information to a terminal device. The ephemeris information includes conventional ephemeris information and gateway station deployment information, the conventional ephemeris information indicates a satellite running location, and the gateway station deployment information indicates a location of at least one gateway station deployed in a satellite constellation. Alternatively, the ephemeris information includes satellite availability information, and the satellite availability information refers to a satellite availability status that changes with time and a location.

According to the foregoing technical solution, the access network device may determine the unavailability period information based on the ephemeris information, and provide the unavailability period information to the terminal device, so that when determining a period of a first timer, the terminal device may consider an unavailability period and set a more appropriate period of the first timer.

With reference to the second aspect, in some implementations of the second aspect, the reference point includes a first reference point and a second reference point; and the unavailability period information includes information about a first period and information about a second period, the first period is an unavailability period of an access connection corresponding to the first reference point, and the second period is an unavailability period of a feeder link corresponding to the second reference point; or the unavailability period information includes information about a sum of an unavailability period of an access connection corresponding to the first reference point and an unavailability period of a feeder link corresponding to the second reference point.

According to the foregoing technical solution, the unavailability period obtained by the access network device includes two parts of periods: one part is the unavailability period of the access connection, and the other part is the unavailability period of the feeder link. In a scenario in which the terminal device communicates with a core network device through the satellite, unavailability of the access connection and unavailability of the feeder link may occur. In this technical solution, the access network device provides the unavailability period of the access connection and the unavailability period of the feeder link to the terminal device, so that the terminal device comprehensively considers the unavailability period of the access connection and the unavailability period of the feeder link when determining the period of the first timer.

In addition, for related descriptions of the first reference point and the second reference point, refer to the first aspect. Details are not described herein again.

With reference to the second aspect, in some implementations of the second aspect, the sending the unavailability period information to the terminal device includes: sending a broadcast message to the terminal device, where the broadcast message includes the unavailability period information; or sending a radio connection resource RRC reconfiguration message to the terminal device, where the RRC reconfiguration message includes the unavailability period information.

According to the foregoing technical solution, the access network device may provide the unavailability period information to the terminal device in a broadcast manner or by using the RRC reconfiguration message, in other words, the access network device may provide the unavailability period information to the terminal device in different manners, to improve flexibility of the solution.

With reference to the second aspect, in some implementations of the second aspect, the determining the unavailability period information based on the ephemeris information includes: determining the information about the first period based on the ephemeris information (for example, based on the conventional ephemeris information or the satellite availability information in the ephemeris information), where the first period is the unavailability period of the access connection corresponding to the first reference point.

With reference to the second aspect, in some implementations of the second aspect, the determining the information about the first period based on the ephemeris information (for example, based on the conventional ephemeris information or the satellite availability information in the ephemeris information) includes: determining, based on the ephemeris information (for example, based on the conventional ephemeris information or the satellite availability information in the ephemeris information), one or more unavailability periods of one or more access connections corresponding to at least one reference point; and determining, based on the one or more unavailability periods of the one or more access connections corresponding to the at least one reference point, that the information about the first period is information about the unavailability period of the access connection corresponding to the first reference point, where the unavailability period of the access connection corresponding to the first reference point is a longest period of the one or more unavailability periods of one or more access connections corresponding to the at least one reference point.

According to the foregoing technical solution, that the access network device determines the information about the first period based on the ephemeris information may be that the access network device determines, based on the ephemeris information (for example, based on the conventional ephemeris information or the satellite availability information in the ephemeris information), the one or more unavailability periods of the one or more access connections corresponding to the at least one reference point, and uses the longest period of the one or more unavailability periods of the one or more access connections corresponding to the at least one reference point as the first period. Therefore, the determined information about the first period can meet requirements of different reference points to the greatest extent.

With reference to the second aspect, in some implementations of the second aspect, the determining the unavailability period information based on the ephemeris information includes: determining the information about the second period based on the ephemeris information (for example, based on the conventional ephemeris information and the gateway station deployment information, or the satellite availability information in the ephemeris information), where the second period is the unavailability period of the feeder link corresponding to the second reference point.

With reference to the second aspect, in some implementations of the second aspect, the determining the information about the second period based on the ephemeris information (for example, based on the conventional ephemeris information and the gateway station deployment information, or the satellite availability information in the ephemeris information) includes: determining, based on the ephemeris information (for example, based on the conventional ephemeris information and the gateway station deployment information, or the satellite availability information in the ephemeris information), one or more unavailability periods of one or more feeder links corresponding to at least one reference point; and determining, based on the one or more unavailability periods of the one or more feeder links corresponding to the at least one reference point, that the information about the second period is information about the unavailability period of the feeder link corresponding to the second reference point, where the unavailability period of the feeder link corresponding to the second reference point is a longest period of the one or more unavailability periods of the one or more feeder links corresponding to the at least one reference point.

According to the foregoing technical solution, that the access network device determines the information about the second period based on the ephemeris information may be that the access network device determines, based on the ephemeris information (for example, based on the conventional ephemeris information and the gateway station deployment information, or the satellite availability information in the ephemeris information), the one or more unavailability periods of the one or more feeder links corresponding to the at least one reference point, and uses the longest period of the one or more unavailability periods of the one or more feeder links corresponding to the at least one reference point as the second period. Therefore, the determined information about the second period can meet requirements of different reference points to the greatest extent.

With reference to the second aspect, in some implementations of the second aspect, the method further includes: sending first indication information to the terminal device, where the first indication information indicates the terminal device to determine the period of the first timer based on the unavailability period, or indicates that the terminal device is in a discontinuous availability scenario.

According to the foregoing technical solution, the access network device may provide the first indication information to the terminal device, so that the terminal device can determine, based on the explicit indication information, a manner of setting the period of the first timer, to prevent the terminal device from still considering the unavailability period in a scenario in which the terminal device does not need to consider the unavailability period.

According to a third aspect, a communication method is provided. The method may be performed by a core network device, or may be performed by a component (for example, a chip or a circuit) of the core network device. This is not limited herein.

The method may include: obtaining unavailability period information, where the unavailability period information indicates a period in which a reference point is in unavailability of a satellite; and determining a period of a second timer based on the unavailability period information, where the second timer is used by the core network device to send a message to a terminal device through the satellite.

According to the foregoing technical solution, before sending the message to the terminal device through the satellite, the core network device obtains the unavailability period information, and obtains, based on the unavailability period information, the period in which the reference point is in the unavailability of the satellite. In addition, when the period of the second timer is set, the period in which the reference point is in the unavailability of the satellite is considered, so that the core network device can determine, based on the second timer, whether sending of the message to the terminal device through the satellite succeeds or fails, to improve determining accuracy of the core network device.

With reference to the third aspect, in some implementations of the third aspect, the reference point includes a third reference point and a fourth reference point; and the unavailability period information includes information about a third period and information about a fourth period, the third period is an unavailability period of an access connection corresponding to the third reference point, and the fourth period is an unavailability period of a feeder link corresponding to the fourth reference point; or the unavailability period information includes information about a sum of an unavailability period of an access connection corresponding to the third reference point and an unavailability period of a feeder link corresponding to the fourth reference point.

According to the foregoing technical solution, the unavailability period obtained by the core network device includes two parts of periods: one part is the unavailability period of the access connection, and the other part is the unavailability period of the feeder link. In a scenario in which the core network device communicates with the terminal device through the satellite, unavailability of the access connection and unavailability of the feeder link may occur. In this technical solution, when determining the period of the second timer, the core network device can set the period of the second timer to be more appropriate for the satellite communication scenario in comprehensive consideration of the unavailability period of the access connection and the unavailability period of the feeder link.

With reference to the third aspect, in some implementations of the third aspect, the determining the period of the second timer based on the unavailability period information includes: determining the period of the second timer based on a preset period of the second timer, the information about the third period, and the information about the fourth period.

With reference to the third aspect, in some implementations of the third aspect, the period of the second timer is longer than or equal to a sum of the preset period of the second timer, the third period, and the fourth period.

According to the foregoing technical solution, the period that is of the second timer and that is determined by the core network device is longer than or equal to the sum of the preset period of the second timer, the third period, and the fourth period. In other words, the period that is of the second timer and that is determined by the core network device is longer than the preset period of the second timer, and a message transmission status between the core network device and the terminal device is not determined based on the preset period of the second timer, so that performance of sending the message to the terminal device by the core network device through the satellite is improved.

With reference to the third aspect, in some implementations of the third aspect, the third reference point and the fourth reference point are the same, or the third reference point and the fourth reference point are different.

According to the foregoing technical solution, the third reference point and the fourth reference point may be the same or different. This is not limited in the technical solution, and flexibility of the solution is improved.

With reference to the third aspect, in some implementations of the third aspect, the third reference point includes at least one of the following: a location of the core network device or the terminal device, a location of a second gateway station, an area in which the second gateway station is located, or an area in which the core network device is located; and the fourth reference point includes at least one of the following: the location of the core network device, the location of the second gateway station, the area in which the second gateway station is located, or the area in which the core network device is located. The second gateway station may be a specified gateway station in at least one gateway station deployed in a satellite constellation. The second gateway station may be a gateway station associated with the core network device in at least one gateway station deployed in a specified satellite constellation. The location of the second gateway station or the area in which the second gateway station is located may be preconfigured.

According to the foregoing technical solution, there may be a plurality of specific forms of the third reference point and/or the fourth reference point. For example, a specific representation form of the third reference point may be the location of the core network device or the terminal device that currently determines the period of the second timer, or the area in which the core network device or the terminal device that currently determines the period of the second timer is located; or the location of the second gateway station or the area in which the second gateway station is located. For another example, a specific implementation form of the fourth reference point may be the location of the core network device or the terminal device that currently determines the period of the second timer, or the area in which the core network device or the terminal device that currently determines the period of the second timer is located; or the location of the second gateway station or the area in which the second gateway station is located. Therefore, the third reference point and/or the fourth reference point may be indicated in different manners, so that the flexibility of the solution is improved.

With reference to the third aspect, in some implementations of the third aspect, the obtaining the unavailability period information includes: receiving the unavailability period information from an operations, administration and maintenance OAM device or an application function AF entity.

According to the foregoing technical solution, a manner in which the core network device obtains the unavailability period information may be directly receiving the unavailability period information from the OAM device or the AF, without needing to perform calculation. Therefore, complexity of the core network device is reduced.

With reference to the third aspect, in some implementations of the third aspect, the obtaining the unavailability period information includes: determining the unavailability period information based on ephemeris information. The ephemeris information includes conventional ephemeris information and gateway station deployment information, the conventional ephemeris information indicates a satellite running location, and the gateway station deployment information indicates a location of at least one gateway station deployed in the satellite constellation. Alternatively, the ephemeris information includes satellite availability information, and the satellite availability information refers to a satellite availability status that changes with time and a location.

According to the foregoing technical solution, a manner in which the core network device obtains the unavailability period information may be that the core network device determines the unavailability period information based on the ephemeris information, and the OAM device or the AF does not need to determine the unavailability period information. Therefore, complexity of the OAM device or the AF is reduced.

With reference to the third aspect, in some implementations of the third aspect, the determining the unavailability period information based on the ephemeris information includes: determining the information about the third period and the information about the fourth period based on the ephemeris information, where the third period is the unavailability period of the access connection corresponding to the third reference point, and the fourth period is the unavailability period of the feeder link corresponding to the fourth reference point, where the unavailability period information includes the information about the third period and the information about the fourth period. The ephemeris information includes the conventional ephemeris information and the gateway station deployment information, the conventional ephemeris information indicates the satellite running location, and the gateway station deployment information indicates the location of the at least one gateway station deployed in the satellite constellation, or the gateway station deployment information indicates the location of the gateway station that is in the at least one gateway station deployed in the satellite constellation and that is connected to the core network device.

According to the foregoing technical solution, when determining the unavailability period information based on the ephemeris information, the core network device determines the information about the third period based on the ephemeris information, and determines the information about the fourth period based on the ephemeris information. Both the unavailability period of the access connection and the unavailability period of the feeder link are considered, so that a more appropriate period of the second timer can be set for the satellite communication scenario.

With reference to the third aspect, in some implementations of the third aspect, the method further includes: receiving the ephemeris information from an operations, administration and maintenance OAM device or an application function AF entity.

With reference to the third aspect, in some implementations of the third aspect, the determining the information about the third period based on the ephemeris information (for example, based on the conventional ephemeris information or the satellite availability information in the ephemeris information) includes: determining, based on the ephemeris information, one or more unavailability periods of one or more access connections corresponding to at least one reference point; and determining, based on the one or more unavailability periods of the one or more access connections corresponding to the at least one reference point, that the information about the third period is information about the unavailability period of the access connection corresponding to the third reference point, where the unavailability period of the access connection corresponding to the third reference point is a longest period of the one or more unavailability periods of the one or more access connections corresponding to the at least one reference point.

According to the foregoing technical solution, that the core network device determines the information about the third period based on the ephemeris information (for example, based on the conventional ephemeris information or the satellite availability information in the ephemeris information) may be that the core network device determines, based on the ephemeris information (for example, based on the conventional ephemeris information or the satellite availability information in the ephemeris information), the one or more unavailability periods of the one or more access connections corresponding to the at least one reference point, and uses the longest period of the one or more unavailability periods of the one or more access connections corresponding to the at least one reference point as the third period. Therefore, the determined information about the third period can meet requirements of different reference points to the greatest extent.

With reference to the third aspect, in some implementations of the third aspect, the determining the information about the fourth period based on the ephemeris information (for example, based on the conventional ephemeris information and the gateway station deployment information, or the satellite availability information in the ephemeris information) includes: determining, based on the ephemeris information, one or more unavailability periods of one or more feeder links corresponding to the at least one reference point; determining, based on the one or more unavailability periods of the one or more feeder links corresponding to the at least one reference point, that the information about the fourth period is information about the unavailability period of the feeder link corresponding to the fourth reference point, where the unavailability period of the feeder link corresponding to the fourth reference point is a longest period of the one or more unavailability periods of the one or more feeder links corresponding to the at least one reference point.

According to the foregoing technical solution, that the core network device determines the information about the fourth period based on the ephemeris information (for example, based on the conventional ephemeris information and the gateway station deployment information, or the satellite availability information in the ephemeris information) may be that the core network device determines, based on the ephemeris information (for example, based on the conventional ephemeris information and the gateway station deployment information, or the satellite availability information in the ephemeris information), the one or more unavailability periods of the one or more feeder links corresponding to the at least one reference point, and uses the longest period of the one or more unavailability periods of the one or more feeder links corresponding to the at least one reference point as the fourth period. Therefore, the determined information about the fourth period can meet requirements of different reference points to the greatest extent.

With reference to the third aspect, in some implementations of the third aspect, the method further includes: when the core network device sends a first response message to the terminal device through the satellite, starting the second timer, where the first response message is used to respond to a connection establishment request of the terminal device; and if a second response message that is from the terminal device and that is in response to the first response message is received before the second timer times out, stopping the second timer; and/or if the second response message in response to the first response message is still not received from the terminal device when the second timer times out, terminating establishment of a connection to the terminal device.

With reference to the third aspect, in some implementations of the third aspect, the first response message includes second indication information, and the second indication information indicates the terminal device to feed back, after receiving the first response message, the second response message in response to the first response message.

With reference to the third aspect, in some implementations of the third aspect, the first response message is a registration accept message, and the second response message is a registration success message.

According to a fourth aspect, a communication apparatus is provided. The apparatus is configured to perform the method according to the first aspect to the third aspect. Specifically, the apparatus may include units and/or modules, for example, a processing unit and/or a communication unit, configured to perform the method according to any one of the implementations of the first aspect to the third aspect.

In an implementation, the apparatus is a terminal device. When the apparatus is the terminal device, the communication unit may be a transceiver or an input/output interface, and the processing unit may be at least one processor. Optionally, the transceiver may be a transceiver circuit. Optionally, the input/output interface may be an input/output circuit.

In another implementation, the apparatus is a chip, a chip system, or a circuit used in a terminal device. When the apparatus is the chip, the chip system, or the circuit used in the terminal device, the communication unit may be an input/output interface, an interface circuit, an output circuit, an input circuit, a pin, a related circuit, or the like on the chip, the chip system, or the circuit, and the processing unit may be at least one processor, processing circuit, logic circuit, or the like.

According to a fifth aspect, a communication apparatus is provided. The apparatus includes: a memory, configured to store a program; and at least one processor, configured to execute a computer program or instructions stored in the memory, to perform the method according to any one of the implementations of the first aspect to the third aspect, or the method according to any one of the implementations of the second aspect and the third aspect.

In an implementation, the apparatus is a terminal device.

In another implementation, the apparatus is a chip, a chip system, or a circuit used in a terminal device.

According to a sixth aspect, this application provides a processor, configured to perform the method according to the foregoing aspects.

Unless otherwise specified, or if operations, such as sending and obtaining/receiving, related to the processor do not contradict actual functions or internal logic of the operations in related descriptions, the operations may be understood as operations, such as outputting, receiving, and inputting, of the processor, or may be understood as sending and receiving operations performed by a radio frequency circuit and an antenna. This is not limited in this application.

According to a seventh aspect, a computer-readable storage medium is provided. The computer-readable medium stores program code executed by a device, and the program code is used to perform the method according to any one of the implementations of the first aspect to the third aspect.

According to an eighth aspect, a computer program product including instructions is provided. When the computer program product runs on a computer, the computer is caused to perform the method according to any one of the implementations of the first aspect to the third aspect.

According to a ninth aspect, a chip is provided. The chip includes a processor and a communication interface. The processor reads, through the communication interface, instructions stored in a memory, to perform the method according to any one of the implementations of the first aspect to the third aspect.

Optionally, in an implementation, the chip further includes the memory. The memory stores a computer program or the instructions, the processor is configured to execute the computer program or the instructions stored in the memory. When the computer program or the instructions are executed, the processor is configured to perform the method according to any one of the implementations of the first aspect to the third aspect.

According to a tenth aspect, a communication system is provided. The system includes the terminal device according to the first aspect and the access network device according to the second aspect.

According to an eleventh aspect, a communication system is provided. The system includes the terminal device according to the first aspect, the access network device according to the second aspect, and the core network device according to the third aspect.

### BRIEF DESCRIPTION OF DRAWINGS

FIG. 1 is a diagram of a network architecture;
FIG. 2 is a diagram of discontinuous availability of an access connection;
FIG. 3 is a diagram of discontinuous availability of a feeder link;
FIG. 4 is a diagram of a NAS timer;
FIG. 5 is a diagram of a communication method according to an embodiment of this application;
FIG. 6 is a diagram of obtaining unavailability period information by a terminal device according to an embodiment of this application;
FIG. 7 is another diagram of obtaining unavailability period information by a terminal device according to an embodiment of this application;
FIG. 8 is another diagram of obtaining unavailability period information by a terminal device according to an embodiment of this application;
FIG. 9 is another diagram of obtaining unavailability period information by a terminal device according to an embodiment of this application;
FIG. 10 is another diagram of a communication method according to an embodiment of this application;
FIG. 11 is a block diagram of a communication apparatus 10 according to an embodiment of this application;
FIG. 12 is another diagram of a communication apparatus 20 according to an embodiment of this application; and
FIG. 13 is a diagram of a chip system 30 according to an embodiment of this application.

### DESCRIPTION OF EMBODIMENTS

The following describes the technical solutions in this application with reference to the accompanying drawings.

The technical solutions provided in this application may be applied to various communication systems, such as a 5th generation (5th generation, 5G) or new radio (new radio, NR) system, a long term evolution (long term evolution, LTE) system, an LTE frequency division duplex (frequency division duplex, FDD) system, and an LTE time division duplex (time division duplex, TDD) system. The technical solutions provided in this application may be further applied to a future communication system, for example, a 6th generation mobile communication system. The technical solutions provided in this application may further be applied to device to device (device to device, D2D) communication, vehicle-to-everything (vehicle-to-everything, V2X) communication, machine to machine (machine to machine, M2M) communication, machine type communication (machine type communication, MTC), an internet of things (internet of things, IoT) communication system, or another communication system.

First, a network architecture applicable to this application is briefly described as follows.

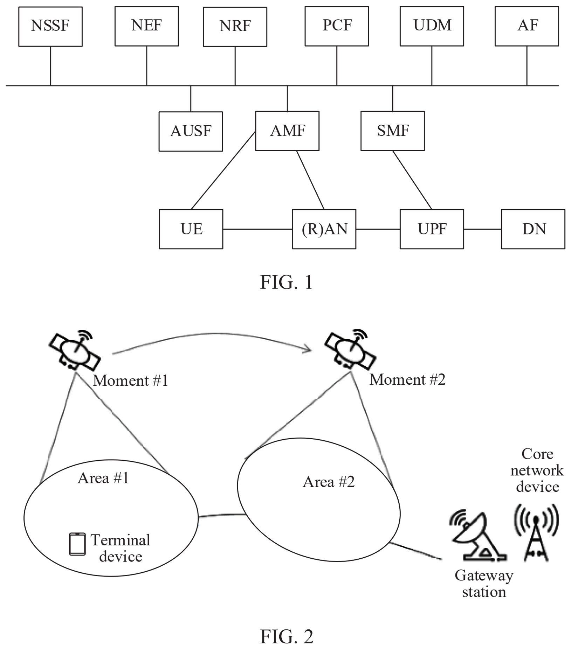

In an example, FIG. 1 is a diagram of a network architecture.

As shown in FIG. 1, a 5G system (5th generation system, 5GS) is used as an example of the network architecture. The network architecture may include but is not limited to: a network slice selection function (network slice selection function, NSSF), an authentication server function (authentication server function, AUSF), a unified data management (unified data management, UDM), a network exposure function (network exposure function, NEF), a network repository function (NF repository function, NRF), a policy control function (policy control function, PCF), an application function (application function, AF), an access and mobility management function (access and mobility management function, AMF), a session management function (session management function, SMF), a user equipment (user equipment, UE), a radio access network device, a user plane function (user plane function, UPF), and a data network (data network, DN).

The DN may be an internet. The NSSF, the AUSF, the UDM, the NEF, the NRF, the PCF, the AF, the AMF, the SMF, and the UPF are network elements in a core network. Because the 5G system is used as an example in FIG. 1, the core network may be referred to as a 5G core network (5G core network, 5GC or 5GCN).

The following briefly describes the network elements shown in FIG. 1.
1. UE: It may be referred to as a terminal device, an access terminal, a subscriber unit, a subscriber station, a mobile station, a remote station, a remote terminal, a mobile device, a user terminal, a terminal, a wireless communication device, a user agent, or a user apparatus.

The terminal device may be a device that provides voice/data for a user, for example, a handheld device or a vehicle-mounted device having a wireless connection function. Currently, some examples of the terminal are: a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in a remote surgery (remote surgery), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device or another processing device connected to a wireless modem, a wearable device, a terminal device in a 5G network, or a terminal device in a future evolved public land mobile communication network (public land mobile network, PLMN). This is not limited in embodiments of this application.

By way of example and not limitation, in embodiments of this application, the terminal device may alternatively be a wearable device. The wearable device may also be referred to as a wearable intelligent device, and is a general term of wearable devices, such as glasses, gloves, a watch, clothing, and shoes, that are intelligently designed and developed for daily wear by using a wearable technology. The wearable device is a portable device that is directly worn or integrated into clothes or an accessory of a user. The wearable device is not only a hardware device, but also implements a powerful function through software support, data exchanging, and cloud interaction. In a broad sense, wearable intelligent devices include full-featured and large-sized devices, such as smart watches or smart glasses, that can implement complete or partial functions without depending on smartphones, and devices, such as various smart bands or smart jewelry for monitoring physical signs, that are dedicated to only one type of application function and need to be used together with other devices such as smartphones.

In addition, the terminal device in embodiments of this application may alternatively be a terminal device in an IoT system. An IoT is an important part of future development of information technologies. A main technical feature of the IoT is connecting a thing to a network by using a communication technology, to implement an intelligent network for human-machine interconnection and thing-thing interconnection.

It should be noted that the terminal device and an access network device may communicate with each other by using an air interface technology (for example, an NR technology or an LTE technology). Terminal devices may also communicate with each other by using an air interface technology (for example, an NR technology or an LTE technology).

In embodiments of this application, an apparatus configured to implement a function of the terminal device may be a terminal device, or may be an apparatus that can support a terminal device in implementing the function, for example, a chip system or a chip. The apparatus may be mounted in the terminal device. In embodiments of this application, the chip system may include a chip, or may include a chip and another discrete device.

2. A (radio) access network ((radio) access network, (R)AN) device: It may provide a function of accessing a communication network for an authorized user in a specific area, and may specifically include a wireless network device in a 3rd generation partnership project (3rd generation partnership project, 3GPP) network, or may include an access point in a non-3GPP (non-3GPP) network. For ease of description, the following uses an AN device for representation.

The AN device may use different radio access technologies. Currently, there are two types of radio access technologies: a 3GPP access technology (for example, a radio access technology used in a 3rd generation (3rd generation, 3G) system, a 4th generation (4th generation, 4G) system, or a 5G system) and a non-3GPP (non-3GPP) access technology. The 3GPP access technology is an access technology that complies with a 3GPP standard specification. For example, an access network device in the 5G system is referred to as a next generation node base station (next generation Node Base station, gNB) or a RAN device. The non-3GPP access technology may include an air interface technology represented by an access point (access point, AP) in wireless fidelity (wireless fidelity, Wi-Fi), worldwide interoperability for microwave access (worldwide interoperability for microwave access, WiMAX), or code division multiple access (code division multiple access, CDMA). The AN device may allow interconnection and interworking performed between a terminal device and a 3GPP core network by using the non-3GPP technology.

The AN device can be responsible for functions such as radio resource management, quality of service (quality of service, QoS) management, and data compression and encryption on an air interface side. The AN device provides an access service for a terminal device, to forward a control signal and user data between the terminal device and the core network.

For example, the AN device may include but is not limited to: a macro base station, a micro base station (also referred to as a small cell), a radio network controller (radio network controller, RNC), a NodeB (NodeB, NB), a base station controller (base station controller, BSC), a base transceiver station (base transceiver station, BTS), a home base station (for example, a home evolved NodeB, or a home NodeB, HNB), a baseband unit (baseband unit, BBU), an AP in a Wi-Fi system, a wireless relay node, a radio backhaul node, a transmission point (transmission point, TP), or a transmission reception point (transmission reception point, TRP); may be a gNB or a transmission point (TRP or TP) in a 5G (for example, NR) system, or one antenna panel or a group of antenna panels (including a plurality of antenna panels) of a base station in a 5G system; or may be a network node constituting a gNB or a transmission point, for example, a distributed unit (distributed unit, DU), or a base station in a next generation 6G communication system. A specific technology and a specific device form that are used for the AN device are not limited in embodiments of this application.

It should be noted that, in this application, a satellite may serve as a RAN, in other words, a terminal device may communicate with a core network side through the satellite. For example, availability problems in remote areas, such as mountainous areas and oceans are resolved through satellite communication. This manner is referred to as regeneration-mode satellite communication. Alternatively, a satellite may be used only as a radio frequency unit, in other words, the function of the RAN is still performed by a ground base station. This is also an implementation of satellite communication, and this manner is referred to as transparent-mode satellite communication.

3. AMF: It is mainly for functions such as access control, mobility management, and attachment and detachment.

4. SMF: It is mainly used for user plane network element selection, user plane network element redirection, terminal device internet protocol (internet protocol, IP) address allocation, session establishment, modification, and release, and QoS control.

5. UPF: It is mainly used for receiving and forwarding user plane data. For example, the UPF may receive user plane data from the DN, and send the user plane data to a terminal device through the AN device. The UPF may alternatively receive user plane data from a terminal device through the AN device, and forward the user plane data to the DN.

6. NEF: It is mainly used for securely exposing, to the outside, a service, a capability, and the like that are provided by a 3GPP network function.

7. PCF: It is mainly used for supporting a unified policy framework to govern network behavior, provide policy rule information to a control plane network element (for example, the AMF or the SMF), and the like.

8. AF: It is mainly used for providing a service for a 3GPP network, for example, interacting with the PCF for policy control.

9. Network slice selection function (network slice selection function, NSSF): It is mainly used for network slice selection.

10. UDM: It is mainly used for UE subscription data handling, including storage and management of a UE identifier, access authorization of the UE, and the like.

11. DN: It is an operator network mainly used for providing a data service for the UE, for example, the Internet (Internet), a third-party service network, or an IP multimedia service (IP multimedia service, IMS) network.

12. AUSF: It is mainly used for user authentication and the like.

13. NRF: It is mainly used for storing a network function entity, description information of a service provided by the network function entity, and the like.

In the network architecture shown in FIG. 1, the network elements may communicate with each other through interfaces. For example, the UE is connected to the AN device according to a radio resource control (radio resource control, RRC) protocol, and the UE communicates with the AN device through a Uu interface.

It should be understood that the network architecture shown above is merely an example for description, and the network architecture applicable to embodiments of this application is not limited thereto. Any network architecture that can implement the functions of the network elements is applicable to embodiments of this application.

It should be further understood that the functions or the network elements, such as the AMF, the SMF, the UPF, the PCF, the UDM, the NSSF, and the AUSF shown in FIG. 1 may be understood as network elements configured to implement different functions, and for example, may be combined into a network slice as required. The network elements may be independent devices, may be integrated into a same device to implement different functions, may be network elements in a hardware device, may be software functions running on dedicated hardware, or may be virtualization functions instantiated on a platform (for example, a cloud platform). Specific forms of the network elements are not limited in this application.

It should be further understood that the foregoing names are defined merely for distinguishing between different functions, and should not constitute any limitation on this application. This application does not exclude a possibility that other names are used in a 6G network and another future network. For example, in the 6G network, some or all of the foregoing network elements may still use the terms in 5G, or may use other names.

For ease of understanding of embodiments of this application, basic concepts in this application are briefly described.
1. Satellite communication ground system: Usually, it uses a star structure including a gateway (Gateway, GW) station and a subscriber station. The gateway station has a large capacity and is usually configured with a large-diameter antenna to connect a ground network and a satellite feeder beam. The subscriber station communicates with the gateway station through a communication satellite. In addition, the satellite communication ground system may further include a network operation center for managing a satellite network and a user service.
2. Discontinuous availability of an access connection: It can be learned from the foregoing descriptions of the RAN that the function of the RAN may be performed by a satellite. A connection between a terminal device and a satellite is referred to as a service link (or may be referred to as an access connection).

A satellite moves around the Earth regularly, so that availability of the satellite is always in a moving state. There is usually a discontinuous availability scenario for a specific ground area. For example, in an oilfield exploitation site located deep in the desert, one or more satellites, when orbiting the Earth regularly, may provide network communication services to the oilfield exploitation site only within a specific time period, for example, collecting and reporting data of various sensors for oilfield exploitation. In other words, a ground device is usually in a scenario without network availability.

For ease of understanding, a scenario of discontinuous availability of an access connection is briefly described with reference to FIG. 2.

As shown in FIG. 2, at a moment #1, an area covered by a satellite is an area #1. As the satellite moves, at a moment #2, an area covered by the satellite is an area #2. At the moment #1, a terminal device is located in the area #1, and may communicate with the satellite through an access connection. At the moment #2, the terminal device is not located in the area #2, and no availability occurs. The scenario shown in FIG. 2 is a scenario of discontinuous availability of an access connection.

3. Discontinuous availability period of an access connection: It may also be referred to as an unavailability period of the access connection. It can be learned from the foregoing descriptions that the access connection between the terminal device and the satellite may not always be in a connected state, and the connection is discontinuous.

For example, within 24 hours, an access connection between a terminal device and a satellite may be disconnected at least once, and a sum of one or more periods of the at least one disconnection of the access connection is a discontinuous availability period of the access connection; a largest value of one or more periods of the at least one disconnection of the access connection is a discontinuous availability period of the access connection; a smallest value of one or more periods of the at least one disconnection of the access connection is a discontinuous availability period of the access connection; an average value of one or more periods of the at least one disconnection of the access connection is a discontinuous availability period of the access connection; or if a period in which the access connection between the terminal device and the satellite is disconnected is used as a discontinuous availability period, the discontinuous availability period of the access connection may change when the connection is disconnected at least once.

It should be understood that the foregoing manner of determining the discontinuous availability period of the access connection is merely an example, and does not constitute any limitation on the protection scope of this application.

4. Discontinuous availability of a feeder link: A connection between a satellite and a ground gateway station is referred to as a feeder link. Same as the discontinuous availability of the access connection, discontinuous availability of the feeder link also exists due to movement of the satellite.

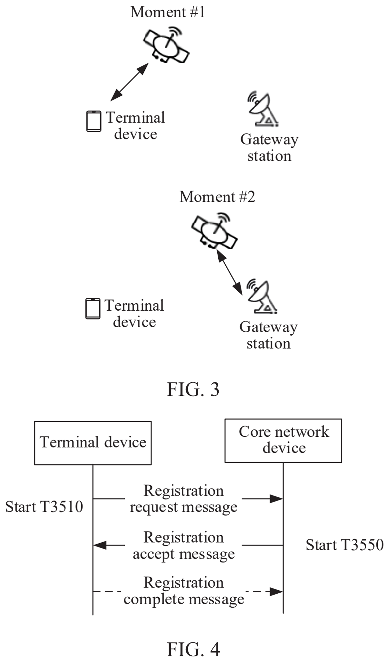

For ease of understanding, a scenario of discontinuous availability of a feeder link is briefly described with reference to FIG. 3.

As shown in FIG. 3, at a moment #1, a satellite may provide an access service to a terminal device, and a service link exists between the terminal device and the satellite. In this case, because the satellite cannot be connected to a ground gateway station, in other words, there is no feeder link, signaling and/or data of the terminal device cannot be sent to a ground core network through the ground gateway station.

As the satellite moves, at a moment #2, the satellite may be connected to the ground gateway station, in other words, there is a feeder link, or there is feeder availability. In this case, signaling and/or data of the terminal device may be sent to the ground core network through the ground gateway station. In this case, no connection exists between the satellite and the terminal device. In addition, as the satellite continues to move, at a moment #3, the satellite may cover the terminal device again, in other words, may provide an access service to the terminal device. In this case, no feeder link exists.

5. Discontinuous availability period of a feeder link: It may also be referred to as an unavailability period of the feeder link. It can be learned from the foregoing descriptions that a connection between a satellite and a ground gateway station may not always be in a connected state, and the connection is discontinuous.

For example, in a satellite constellation running cycle, a feeder link between a gateway station and a satellite may be disconnected at least once, and a sum of one or more periods of the at least one disconnection of the feeder link is a discontinuous availability period of the feeder link; a largest value of one or more periods of the at least once disconnection of the feeder link is a discontinuous availability period of the feeder link; a smallest value of one or more periods of the at least one disconnection of the feeder link is a discontinuous availability period of the feeder link; an average value of one or more periods of the at least one disconnection of the feeder link is a discontinuous availability period of the feeder link; or if a period in which the feeder link between the gateway station and the satellite is disconnected is used as a discontinuous availability period, the discontinuous availability period of the feeder link may change when the connection is disconnected at least once.

It should be understood that the foregoing manner of determining the discontinuous availability period of the feeder link is merely an example, and does not constitute any limitation on the protection scope of this application.

6. Unavailability period information: It may also be referred to as discontinuous availability period information. It indicates information about an unavailability status, of a satellite, that varies with time and a location. The unavailability period information is information indicating a period, and the period is a period in which a location is not covered by a satellite.

For example, in a satellite constellation running cycle, a location #1 is not covered by a satellite at least once, and a period indicated by unavailability period information is a largest value of one or more periods in which the location #1 is not covered by the satellite at least once; an average value of one or more periods in which the location #1 is not covered by the satellite at least once; a smallest value of one or more periods in which the location #1 is not covered by the satellite at least once; or a period in which the location #1 is not covered each time, in other words, a discontinuous availability period may change for the location #1.

The unavailability period information may be specifically represented in a plurality of manners. For example, the unavailability period information may be represented by using a time length (namely, a duration), or may be represented by using a start time point and an end time point, or may be represented by using a start time point and a time length. The unavailability period information may be obtained in a plurality of manners. For example, the unavailability period information may be represented by using ephemeris information, or may be represented by using a map. A specific manner is not limited in this application. It may be understood that the time length is used as an example for description in the following descriptions of this application.

For example, an unavailability period information representation manner #1 is: There is a period beyond availability of an access connection and/or a feeder link at the location #1 in the satellite constellation running cycle. Alternatively, an unavailability period information representation manner #2 is: There is no access connection and/or feeder link at a location #2 until a moment #1.

7. Ephemeris information: In a possible implementation, the ephemeris information in this application includes but is not limited to conventional ephemeris information and gateway station deployment information. The conventional ephemeris information includes but is not limited to an orbit parameter, or a parameter such as an azimuth location, of a satellite, obtained through calculation based on the orbit parameter. It may be understood that the conventional ephemeris information may be used to calculate, predict, describe, or track flight states of the satellite, such as time, a location, and a speed. For example, the conventional ephemeris information may be information, of 17 bytes (bytes), indicating a location (78 bits) and a speed (54 bits), or the conventional ephemeris information may be information, of 18 bytes, indicating an orbit parameter (for example, a parameter such as a semi-major axis, a range (range), an eccentricity, or an argument of perigee).

It should be noted that a specific form and content of the conventional ephemeris information are not limited in this application. For details, refer to a definition of ephemeris information in an existing protocol.

The gateway station deployment information includes location information of at least one gateway station deployed in a satellite constellation. For example, three ground gateway stations GW #1 to GW #3 are deployed in the satellite constellation, and respectively correspond to three locations GW-location #1, GW-location #2, and GW-location #3. A specific form, content, and name of the ephemeris information are not limited in this application. For example, the ephemeris information in this application may also be referred to as satellite availability information (satellite availability information).

In addition, it should be noted that a discontinuous availability period of an access connection may be determined based on the conventional ephemeris information in the ephemeris information. A discontinuous availability period of a feeder link may be determined based on the conventional ephemeris information and the gateway station deployment information in the ephemeris information.

In another possible implementation, the ephemeris information in this application includes satellite availability information, and the satellite availability information refers to a satellite availability status that changes with time and a location.

For example, for a fixed location, a representation form of the satellite availability information is: <N><0 or 1><Duration 1><0 or 1><Duration 2>....<0 or 1><Duration N>. N indicates a specific quantity of durations without availability or with availability; 0 indicates without availability, and 1 indicates with availability; and Duration (Duration) indicates a duration without availability or with availability.

For example, <0><duration 1, 9:00-10:00> indicates that there is no availability in 9:00-10:10. For another example, <1><duration 2, 10:00-12:00> indicates that there is availability in 10:00-12:10.

For example, for fixed time, a representation form of the satellite availability information is: <N>< 0 or 1><location 1><0 or 1><location 2>....<0 or 1><location N>. N indicates a specific quantity of locations or location areas without availability or with availability; 0 indicates without availability, and 1 indicates with availability; and location (location) indicates a location or location area without availability or with availability.

For example, <0><location 1> indicates that there is no availability at location 1 at fixed time. For another example, <1><location 2> indicates that there is availability at location 2 at fixed time.

8. NAS timer: It is a timer used to determine whether non-access stratum signaling is successfully transmitted. The timer includes but is not limited to a timer for determining whether signaling is successfully transmitted in a registration procedure, or may be signaling in a service request procedure. This is not limited.

For ease of understanding, a possible form of the NAS timer in embodiments of this application is described with reference to FIG. 4.

In FIG. 4, an example in which a terminal device accesses a core network is used to describe a NAS timer maintained on a terminal device side and a NAS timer maintained on an AMF side.

It can be learned from FIG. 4 that when the terminal device initiates a network access procedure (namely, a registration procedure), the terminal device starts a NAS timer T3510 when the terminal device sends a registration request (registration request) message to an AMF. If the terminal device receives, within a timing process of the T3510, a response message, for example, a registration accept (registration accept) message, sent by the AMF, the T3510 is stopped, and the terminal device successfully accesses a network. If the terminal device still does not receive any response message, for example, registration accept or registration reject, when the T3510 times out, the terminal device fails to send the registration request message, in other words, the message is not sent successfully. The terminal device may start another timer, for the terminal device to re-initiate a registration procedure.

For example, after sending the registration accept to the terminal device, the AMF may start a NAS timer T3550. If the AMF receives, within a timing process of the T3550, a registration complete (registration complete) message sent by the terminal device, the AMF stops the T3550, and a network access procedure of the terminal device is completed. If the AMF still does not receive the registration complete message when the T3550 times out, the terminal device fails to access the network or the registration accept fails to be sent. The AMF may start another timer, for the terminal device to re-initiate a registration procedure.

It should be noted that if the AMF does not need to receive the registration complete message, the AMF does not start the NAS timer T3550.

The foregoing briefly describes the basic concepts in this application. Details are not described in the following embodiments.

In addition, the following several descriptions are first provided to facilitate understanding of embodiments of this application.

First, in this application, "indicate" may include "directly indicate" and "indirectly indicate". When a piece of indication information indicates A, the indication information may directly indicate A or indirectly indicate A, but it does not mean that the indication information definitely carries A.

Second, "at least one" shown in this application means one or more, and "a plurality of" means two or more. In addition, in embodiments of this application, "first", "second", and various numeric numbers (for example, "#1" and "#2") are merely used for distinguishing for ease of description, and are not used to limit the scope of embodiments of this application. Sequence numbers in the following processes do not mean execution sequences. The execution sequences of the processes should be determined based on functions and internal logic of the processes, and should not constitute any limitation on implementation processes of embodiments of this application. It should be understood that, objects described in this way may be interchangeable in appropriate cases, so that solutions other than embodiments of this application can be described. In addition, in embodiments of this application, words such as "S510" are merely identifiers for ease of description, and do not limit a step execution sequence.

Third, in embodiments of this application, a word such as "example" or "for example" are used to give an example, an illustration, or a description. Any embodiment or design solution described as an "example" or "for example" in this application should not be explained as being more preferred or having more advantages than another embodiment or design solution. To be precise, use of the word such as "example" or "for example" is intended to present a relative concept in a specific manner.

Fourth, in embodiments of this application, "of (of)", "corresponding or relevant (corresponding, relevant)", "corresponding (corresponding)", and "associate (associate)" may sometimes be used interchangeably. It should be noted that meanings expressed by the terms are consistent when differences between the terms are not emphasized.

Fifth, in embodiments of this application, "in a case of", "when", and "if" may sometimes be used interchangeably. It should be noted that meanings expressed by the terms are consistent when differences between the terms are not emphasized.

Sixth, the term "and/or" in this specification is merely an association relationship for describing associated objects, and indicates that three relationships may exist. For example, A and/or B may indicate the following three cases: Only A exists, both A and B exist, and only B exists. In addition, the character "/" in this specification generally indicates an "or" relationship between the associated objects.

With reference to FIG. 1, the foregoing briefly describes the scenario to which the communication method provided in embodiments of this application can be applied, describes the basic concepts that may be used in embodiments of this application, and describes the discontinuous availability of the access connection, the discontinuous availability of the feeder link, and the NAS timer in the basic concepts.

Currently, in a scenario in which a terminal device accesses a core network through a satellite, a period of a NAS timer maintained on a terminal device side is 27 seconds (seconds, s), and a period of a NAS timer maintained on an AMF side is 11s.

Specifically, when discontinuous availability of an access connection and discontinuous availability of a feeder link occur, a current design of a NAS timer may affect accuracy of determining, by a device (for example, a terminal device and/or an AMF), whether non-access stratum signaling is successfully transmitted. For example, because of the discontinuous availability of the feeder link (in other words, the feeder link does not always exist), signaling exchange between the terminal device and a ground core network takes a long period.

The registration procedure shown in FIG. 4 is used as an example for description. In the registration procedure of the terminal device, when the terminal device is in satellite access availability, the registration request message sent by the terminal device is buffered on a satellite, and the satellite forwards the registration request message to the AMF only when there is a feeder link. In other words, because of discontinuous availability of the feeder link, the registration request message cannot arrive at the AMF in a timely manner. Similarly, for the registration accept message sent by the AMF, due to discontinuous availability of an access connection, the registration accept message cannot arrive at the terminal device in a timely manner.

In view of the foregoing case, due to the discontinuous availability of the feeder link, there is a high probability that the terminal device cannot receive, before the timer T3510 times out, the registration accept message sent by the AMF. In this case, the terminal device fails in network access, and re-initiates a registration procedure. Consequently, registration cannot be completed in a timely manner, and unnecessary signaling overheads are further caused.

Therefore, in embodiments provided in this application, when the period of the NAS timer maintained on the terminal device side is set, the discontinuous availability period of the access connection and the discontinuous availability period of the feeder link are introduced.

For another example, after an AMF in the ground core network receives a registration request message sent by the terminal device, the AMF sends a registration accept message to the terminal device, and starts the NAS timer maintained on the AMF side. Due to the discontinuous availability of the access connection and the discontinuous availability of the feeder link, the AMF cannot send the registration accept message to the terminal device in a timely manner, and the terminal device cannot send a registration complete message to the AMF in a timely manner.

Therefore, in embodiments provided in this application, when the period of the NAS timer maintained on the AMF side is set, the discontinuous availability period of the access connection and the discontinuous availability period of the feeder link are introduced.

This application provides a communication method, to set an appropriate timer period in a scenario in which discontinuous availability occurs.

The following describes the technical solutions provided in this application in detail with reference to the accompanying drawings. Embodiments of this application may be applied to a plurality of different scenarios, including but not limited to the scenario shown in FIG. 1.

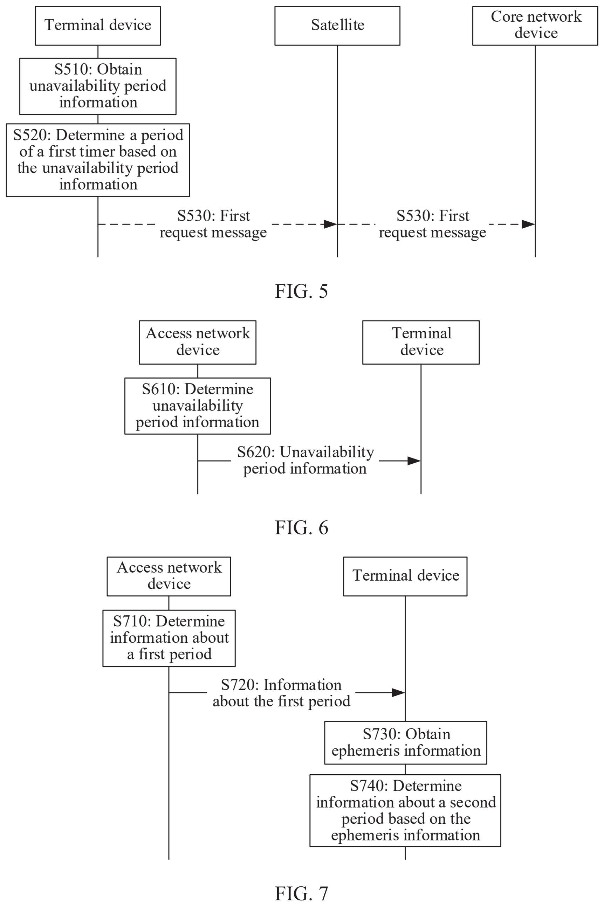

Without a loss of generality, in FIG. 5, interaction between a network device and a terminal device is used as an example below to describe in detail the communication method provided in embodiments of this application. The network device includes an access network device and a core network device.

It should be understood that, a specific structure of an execution body of the method provided in embodiments of this application is not specifically limited in embodiments shown below, provided that a program that records code of the method provided in embodiments of this application can be run to perform communication according to the method provided in embodiments of this application. For example, the method provided in embodiments of this application may be performed by a terminal device and a network device, or functional modules that can invoke and execute the program in the terminal device and the network device.

FIG. 5 is a schematic flowchart of a communication method according to an embodiment of this application. The communication method is applied to a communication system in which a terminal device accesses a core network through a satellite.

The communication method includes the following steps.

S510: The terminal device obtains unavailability period information.

The unavailability period information may indicate a period in which a reference point is in unavailability of the satellite. The reference point may be understood as a location point such as a geographical location or a geographical area. This is not limited.

It may be understood that the unavailability period information may indicate a period in which the reference point is not covered by the satellite.

For example, the reference point is not covered by the satellite in a period #1 and a period #2. An unavailability period may be a sum of the period #1 and the period #2, an unavailability period may be a larger value of the period #1 and the period #2, an unavailability period may be an average value of the period #1 and the period #2, or an unavailability period may be a corresponding satellite unavailability period when the terminal device obtains discontinuous availability period information.

In an example, the reference point may include a first reference point and a second reference point, and the unavailability period information may include information about a first period and information about a second period. The first period may be an unavailability period of an access connection corresponding to the first reference point, and the second period may be an unavailability period of a feeder link corresponding to the second reference point.

In another example, the reference point may include a first reference point and a second reference point, and the unavailability period information may include information about a sum of an unavailability period of an access connection corresponding to the first reference point and an unavailability period of a feeder link corresponding to the second reference point.

It should be noted that the first reference point and the second reference point may be the same or may be different. This is not limited.

When the first reference point and the second reference point are the same, the first reference point and the second reference point may be an area, and there are both a terminal device and a gateway station in the area.

Optionally, the first reference point includes at least one of the following: a location of the terminal device, a location of a first gateway station, an area in which the first gateway station is located, or an area in which the terminal device is located. The first gateway station may be a gateway station specified in at least one gateway station deployed in a satellite constellation, the location of the first gateway station or the area in which the first gateway station is located may be preconfigured, and the terminal device is the foregoing terminal device that obtains the unavailability period information.

If the first reference point is the location of the terminal device, the unavailability period of the access connection corresponding to the first reference point is an unavailability period of an access connection between the terminal device and the satellite. For example, if the first reference point is a location of a terminal device #1, and an unavailability period of an access connection between the terminal device #1 and the satellite is a period #1, the unavailability period of the access connection corresponding to the first reference point is the period #1.

If the first reference point is the area in which the terminal device is located, the unavailability period of the access connection corresponding to the first reference point is a largest value, an average value, a weighted average value, or the like of unavailability periods of access connections between all terminal devices in the area and the satellite. The area in which the terminal device is located may be a geographical area location, or may be a cell, a TA, or the like. For example, the first reference point is an area #1 in which a terminal device #1 is located, the terminal device #1 is located in the area #1, and there are also a terminal device #2 and a terminal device #3 in the area #1. If an unavailability period of an access connection between the terminal device #1 and the satellite is a period #1, an unavailability period of an access connection between the terminal device #2 and the satellite is a period #2, and an unavailability period of an access connection between the terminal device #3 and the satellite is a period #3, the unavailability period of the access connection corresponding to the first reference point is a longest period of the period #1, the period #2, and the period #3; or the unavailability period of the access connection corresponding to the first reference point is an average value of the period #1, the period #2, and the period #3.

If the first reference point is the location of the first gateway station, the unavailability period of the access connection corresponding to the first reference point is an unavailability period of an access connection between a terminal device at the location of the first gateway station and the satellite. For example, if the first reference point is the location of the first gateway station, and an unavailability period of an access connection between a terminal device #2 at the location of the first gateway station and the satellite is a period #2, the unavailability period of the access connection corresponding to the first reference point is the period #2.

If the first reference point is the area in which the first gateway station is located, the unavailability period of the access connection corresponding to the first reference point is a largest value, an average value, a weighted average value, or the like of unavailability periods of access connections between all terminal devices in the area and the satellite. The area in which the first gateway station is located may be a geographical area location, or may be a cell, a TA, or the like. For example, the first reference point is an area #2 in which a gateway station #1 is located, a terminal device #1 is located in the area #2, and there are also a terminal device #2 and a terminal device #3 in the area #2. If an unavailability period of an access connection between the terminal device #1 and the satellite is a period #1, an unavailability period of an access connection between the terminal device #2 and the satellite is a period #2, and an unavailability period of an access connection between the terminal device #3 and the satellite is a period #3, the unavailability period of the access connection corresponding to the first reference point is a longest period of the period #1, the period #2, and the period #3; or the unavailability period of the access connection corresponding to the first reference point is an average value of the period #1, the period #2, and the period #3.

Optionally, the second reference point includes at least one of the following: the location of the terminal device, the location of the first gateway station, the area in which the first gateway station is located, or the area in which the terminal device is located. The first gateway station may be a gateway station specified in at least one gateway station deployed in a satellite constellation, the location of the first gateway station or the area in which the first gateway station is located may be preconfigured, and the terminal device is the foregoing terminal device that obtains the unavailability period information.

If the second reference point is the location of the terminal device, the unavailability period of the feeder link corresponding to the second reference point is an unavailability period of a feeder link between a gateway station at the location of the terminal device and the satellite. For example, if the second reference point is a location of a terminal device #1, and an unavailability period of a feeder link between a gateway station at the location of the terminal device #1 and the satellite is a period #1, the unavailability period of the feeder link corresponding to the second reference point is the period #1.

If the second reference point is the area in which the terminal device is located, the unavailability period of the feeder link corresponding to the second reference point is a largest value, an average value, a weighted average value, or the like of unavailability periods of feeder links between all gateway stations in the area and the satellite. The area in which the terminal device is located may be a geographical area location, or may be a cell, a TA, or the like. For example, the second reference point is an area #1 in which a terminal device #1 is located, a gateway station #1 is located in the area #1, and there are also a gateway station #2 and a gateway station #3 in the area #1. If an unavailability period of a feeder link between the gateway station #1 and the satellite is a period #1, an unavailability period of a feeder link between the gateway station #2 and the satellite is a period #2, and an unavailability period of a feeder link between the gateway station #3 and the satellite is a period #3, the unavailability period of the feeder link corresponding to the second reference point is a longest period of the period #1, the period #2, and the period #3; or the unavailability period of the feeder link corresponding to the second reference point is an average value of the period #1, the period #2, and the period #3.

If the second reference point is the location of the first gateway station, the unavailability period of the feeder link corresponding to the second reference point is an unavailability period of a feeder link between the first gateway station and the satellite. For example, if the second reference point is the location of the first gateway station, and the unavailability period of the feeder link between the first gateway station and the satellite is a period #2, the unavailability period of the feeder link corresponding to the second reference point is the period #2.

If the second reference point is the area in which the first gateway station is located, the unavailability period of the feeder link corresponding to the second reference point is a largest value, an average value, a weighted average value, or the like of unavailability periods of feeder links between all gateway stations in the area and the satellite. The area in which the first gateway station is located may be a geographical area location, or may be a cell, a TA, or the like. For example, the second reference point is an area #2 in which a gateway station #1 is located, the gateway station #1 is located in the area #2, and there are also a gateway station #2 and a gateway station #3 in the area #2. If an unavailability period of a feeder link between the gateway station #1 and the satellite is a period #1, an unavailability period of a feeder link between the gateway station #2 and the satellite is a period #2, and an unavailability period of a feeder link between the gateway station #3 and the satellite is a period #3, the unavailability period of the feeder link corresponding to the second reference point is a longest period of the period #1, the period #2, and the period #3; or the unavailability period of the feeder link corresponding to the second reference point is an average value of the period #1, the period #2, and the period #3.

In this embodiment, the unavailability period information indicates an unavailability period of an access connection and an unavailability period of a feeder link. For example, the unavailability period information includes two parts: information about a first period and information about a second period. For another example, the unavailability period information is one part: information about a sum of an unavailability period of an access connection corresponding to the first reference point and an unavailability period of a feeder link corresponding to the second reference point.

The first period may be an unavailability period of an access connection corresponding to a reference point (referred to as the first reference point for differentiation), and the second period may be an unavailability period of a feeder link corresponding to a reference point (referred to as the second reference point for differentiation).

The unavailability period of the access connection corresponding to the first reference point may be understood as an unavailability period of an access connection between a terminal device at the first reference point and the satellite. For example, the terminal device at the first reference point includes a terminal device #1, and the unavailability period of the access connection corresponding to the first reference point is a period in which there is no access connection between the terminal device #1 and the satellite. The access connection is a connection between the terminal device #1 and the satellite, in other words, the access connection means that the terminal device #1 is covered by the satellite and is served by the satellite. It may be understood that the satellite herein is a general concept, and may be one or more satellites in a satellite constellation.

The unavailability period of the feeder link corresponding to the second reference point may be understood as an unavailability period of a feeder link between a gateway station at the second reference point and the satellite. For example, the gateway station on the second reference point is a gateway station #1, and the unavailability period of the feeder link corresponding to the second reference point is a period in which there is no feeder link between the gateway station #1 and the satellite. The feeder link is a connection between the gateway station #1 and the satellite, in other words, the feeder link means that the gateway station #1 serves the satellite or the gateway station #1 serves the satellite. It may be understood that the satellite herein is a general concept, and may be one or more satellites in a satellite constellation.

It should be understood that the information about the first period includes but is not limited to the first period or information related to the first period. For example, the information about the first period is the first period, or the information about the first period is indication information of the first period, and indicates the first period. Similarly, the information about the second period includes but is not limited to the second period or information related to the second period. For example, the information about the second period is the second period, or the information about the second period is indication information of the second period, and indicates the second period.

In addition, it should be noted that the first period being the unavailability period of the access connection corresponding to the first reference point is merely an example, and does not constitute any limitation on the protection scope of this application. For example, the first period may further include the following several possible value obtaining manners:

In a possible implementation, the reference point includes at least one reference point, and the unavailability period information includes the information about the first period. The first period may be a longest period of one or more unavailability periods of one or more access connections respectively corresponding to the at least one reference point.

For example, the reference point includes a reference point #1_1, a reference point #2_1, and a reference point #3_1. An unavailability period of an access connection corresponding to the reference point #1_1 is a period #1_1, an unavailability period of an access connection corresponding to the reference point #2_1 is a period #2_1, and an unavailability period of an access connection corresponding to the reference point #3_1 is a period #3_1. The first period is a largest value of the period #1_1, the period #2_1, and the period #3_1.

In another possible implementation, the reference point includes at least one reference point, and the unavailability period information includes the information about the first period. The first period may be an average value or a weighted average value of one or more unavailability periods of one or more access connections respectively corresponding to the at least one reference point.

For example, the reference point includes a reference point #1_1, a reference point #2_1, and a reference point #3_1. An unavailability period of an access connection corresponding to the reference point #1_1 is a period #1_1, an unavailability period of an access connection corresponding to the reference point #2_1 is a period #2_1, and an unavailability period of an access connection corresponding to the reference point #3_1 is a period #3_1. The first period is an average value or a weighted average value of the period #1_1, the period #2_1, and the period #3_1.

In still another possible implementation, the reference point includes at least one reference point, and the unavailability period information includes the information about the first period. The first period may be a shortest period of one or more unavailability periods of one or more access connections respectively corresponding to the at least one reference point.

For example, the reference point includes a reference point #1_1, a reference point #2_1, and a reference point #3_1. An unavailability period of an access connection corresponding to the reference point #1_1 is a period #1_1, an unavailability period of an access connection corresponding to the reference point #2_1 is a period #2_1, and an unavailability period of an access connection corresponding to the reference point #3_1 is a period #3_1. The first period is a smallest value of the period #1_1, the period #2_1, and the period #3_1.

In still another possible implementation, the reference point includes at least one reference point, and the unavailability period information includes the information about the first period. The first period may be a value that appears most frequently in one or more unavailability periods of one or more access connections respectively corresponding to the at least one reference point.

For example, the reference point includes a reference point #1_1, a reference point #2_1, and a reference point #3_1. An unavailability period of an access connection corresponding to the reference point #1_1 is a period #1_1, an unavailability period of an access connection corresponding to the reference point #2_1 is a period #2_1, and an unavailability period of an access connection corresponding to the reference point #3_1 is a period #3_1. The period #1_1 is equal to the period #2_1, and the first period is the period #1_1.

Similarly, the second period being the unavailability period of the feeder link corresponding to the second reference point is merely an example, and does not constitute any limitation on the protection scope of this application. For example, the second period may further include the following several possible value obtaining manners:

In a possible implementation, the reference point includes at least one reference point, and the unavailability period information includes the information about the second period. The second period may be a longest period of one or more unavailability periods of one or more feeder links respectively corresponding to the at least one reference point.

For example, the reference point includes a reference point #1_2, a reference point #2_2, and a reference point #3_2. An unavailability period of a feeder link corresponding to the reference point #1_2 is a period #1_2, an unavailability period of a feeder link corresponding to the reference point #2_2 is a period #2_2, and an unavailability period of a feeder link corresponding to the reference point #3_2 is a period #3_2. The second period is a largest value of the period #1_2, the period #2_2, and the period #3_2.

In another possible implementation, the reference point includes at least one reference point, and the unavailability period information includes the information about the second period. The second period may be an average value or a weighted average value of one or more unavailability periods of one or more feeder links respectively corresponding to the at least one reference point.

For example, the reference point includes a reference point #1_2, a reference point #2_2, and a reference point #3_2. An unavailability period of a feeder link corresponding to the reference point #1_2 is a period #1_2, an unavailability period of a feeder link corresponding to the reference point #2_2 is a period #2_2, and an unavailability period of a feeder link corresponding to the reference point #3_2 is a period #3_2. The second period is an average value or a weighted average value of the period #1_2, the period #2_2, and the period #3_2.

In still another possible implementation, the reference point includes at least one reference point, and the unavailability period information includes the information about the second period. The second period may be a shortest period of one or more unavailability periods of one or more feeder links respectively corresponding to the at least one reference point.

For example, the reference point includes a reference point #1_2, a reference point #2_2, and a reference point #3_2. An unavailability period of a feeder link corresponding to the reference point #1_2 is a period #1_2, an unavailability period of a feeder link corresponding to the reference point #2_2 is a period #2_2, and an unavailability period of a feeder link corresponding to the reference point #3_2 is a period #3_2. The second period is a smallest value of the period #1_2, the period #2_2, and the period #3_2.

In still another possible implementation, the reference point includes at least one reference point, and the unavailability period information includes the information about the second period. The second period may be a value that appears most frequently in one or more unavailability periods of one or more feeder links respectively corresponding to the at least one reference point.

For example, the reference point includes a reference point #1_2, a reference point #2_2, and a reference point #3_2. An unavailability period of a feeder link corresponding to the reference point #1_2 is a period #1_2, an unavailability period of a feeder link corresponding to the reference point #2_2 is a period #2_2, and an unavailability period of a feeder link corresponding to the reference point #3_2 is a period #3_2. The period #1_2 is equal to the period #2_2, and the second period is the period #1_2.

In this embodiment, the terminal device may obtain the unavailability period information in a plurality of different manners. The following describes in detail how the terminal device obtains the unavailability period information with reference to FIG. 6 to FIG. 9. Details are not described herein.

S520: The terminal device determines a period of a first timer based on the unavailability period information.

The first timer may be used by the terminal device to send a message to a core network device through the satellite. Specifically, the first timer may be a timer, for example, T3510, T3511, or T3517, defined in a 3GPP protocol. The first timer may be a timer, for example, T3510 or T3511, maintained by the terminal device in a registration procedure. The first timer may be a timer, for example, T3517, maintained by the terminal device in a service request procedure.

Specifically, the first timer is maintained by the terminal device, and the terminal device may determine, based on a timeout status of the first timer, whether sending of the message to the core network device succeeds or fails. Alternatively, the terminal device may determine, based on a timeout status of the first timer, an action to be performed after the message is sent to the core network device through the satellite.

In this embodiment, the terminal device considers the unavailability period when setting the period of the first timer, to resolve a problem that the period of the first timer is set inappropriately.

In an optional implementation, step S520 may be performed by the terminal device based on first indication information provided by an access network device. For example, the terminal device receives the first indication information from the access network device, and performs step S520 when the first indication information indicates the terminal device to determine the period of the first timer based on the unavailability period, or indicates that the terminal device is in a discontinuous availability scenario.

The discontinuous availability scenario may include a discontinuous availability scenario of an access connection and/or a discontinuous availability scenario of a feeder link.

In another optional implementation, when the terminal device may determine that the terminal device is in a discontinuous availability scenario, step S520 is performed. For example, the terminal device determines, based on satellite-related information (for example, information such as a satellite identifier and a satellite constellation feature), that the terminal device is in a discontinuous availability scenario. The satellite-related information may be from the access network device, or may be from a third-party device. This is not limited.

The unavailability period information may include the information about the first period and the information about the second period. Further, step S520 may include: The terminal device determines the period of the first timer based on a preset period of the first timer, the information about the first period, and the information about the second period. The preset period of the first timer may be a period, of the first timer, predefined in a 3GPP protocol. This is not limited.

Specifically, the period of the first timer may be longer than or equal to a sum of the preset period of the first timer, the first period, and the second period.

For example, if the first timer is a NAS timer T3510, the period of the first timer≥27s+the first period+the second period.

In this embodiment, before sending the message to the core network device through the satellite, the terminal device obtains the unavailability period information, and obtains, based on the unavailability period information, the period in which the reference point is in the unavailability of the satellite. In addition, when the period of the first timer is set, the period in which the reference point is in the unavailability of the satellite is considered, so that the terminal device can determine, based on the first timer, whether sending of the message to the core network device through the satellite succeeds or fails, to improve determining accuracy of the terminal device.

Optionally, based on the foregoing embodiment, after step S520, the method further includes:

S530: The terminal device sends a first request message to the core network device through the satellite, and starts the first timer.

Specifically, the terminal device starts the first timer when sending the first request message to the core network device through the satellite.

The first request message may be used to request to establish a connection to the core network device.

Further, after step S530, the method may further include: If the terminal device receives, before the first timer times out, a first response message that is from the core network device and that is in response to the first request message, the terminal device stops the first timer; and/or
if the terminal device still does not receive, when the first timer times out, the first response message that is from the core network device and that is in response to the first request message, the terminal device terminates the establishment of the connection to the core network device.

For example, the first request message is a registration request message. For example, the terminal device sends an RRC establishment complete message to the satellite, where the RRC establishment complete message carries the registration request message sent by the terminal device to the core network device.

It should be noted that the RRC establishment complete message may further include other information (for example, information such as an identifier of a selected public land mobile network (Public Land Mobile Network, PLMN) and a network slice list). Specific content carried in the RRC establishment complete message and specific content carried in the registration request message are not limited in this embodiment. In this embodiment, the terminal device mainly determines the period of the first timer, and determines, based on a timeout status of the first timer, whether the first message is successfully sent.

Optionally, the first request message is a registration request message, and the first response message is a registration accept message or a registration reject message. It should be understood that, when the first request message is the registration request message, that the terminal device receives, before the first timer times out, the first response message that is from the core network device and that is in response to the first request message may be understood as follows: The terminal device determines that registration succeeds or the first request message is sent successfully. The terminal device still does not receive, when the first timer times out, the first response message that is from the core network device and that is in response to the first request message may be understood as follows: The terminal device determines that registration fails or the first request message fails to be sent.

Optionally, the first request message is a service request message, and the first response message is a service accept message.

In the embodiment shown in FIG. 5, when the terminal device accesses the core network through the satellite, the terminal device sends the first request message to the core network device through the satellite, starts the first timer, and determines, based on the timeout status of the first timer, whether the first request message is successfully sent. For example, if the first response message from the core network device is received before the first timer times out, the terminal device stops the first timer.

Because an unavailability status of the satellite changes with time and a location, in the embodiment shown in FIG. 5, the terminal device considers the unavailability period when determining the period of the first timer, to avoid an inappropriate period that is of the first timer and that is determined by the terminal device.

It should be understood that in the communication method shown in FIG. 5, that the first timer is used by the terminal device to send the message to the core network device through the satellite is merely an example, and does not constitute any limitation on the protection scope of this application. The terminal device may further consider unavailability period when determining period of another timer. For example, the first timer is an AS timer, and the terminal device may also consider impact of unavailability period when determining period of the AS timer (for example, an air interface timer).

Specifically, the air interface timer is configured to manage an air interface connection between the terminal device and the access network device. The air interface timer may be T310. When detecting a physical layer problem (for example, a disconnection of an RRC link), the terminal device starts the T310. During running of the T310, if the RRC link is restored, the terminal device stops the T310. When the T310 times out, the terminal device releases a current RRC connection, or starts an RRC connection re-establishment process. In other words, when the T310 times out, the terminal device considers that the RRC link fails, and therefore starts the foregoing release or re-establishment procedure.

It should be understood that because of discontinuous availability (for example, discontinuous availability of an access connection and/or discontinuous availability of a feeder link) of the satellite, the following scenario occurs: When there is availability of an access connection (in other words, an access network device #1 may provide an access service to the terminal device), the terminal device initiates an RRC connection establishment process to the access network device #1. However, as the satellite moves, the access network device #1 cannot provide the access service to the terminal device, in other words, enter discontinuous availability of the access connection. In this case, the terminal device starts the T310. When the T310 times out, the terminal device initiates RRC connection release or re-establishment. As a result, the terminal device cannot complete a network access procedure.

If the unavailability period is not considered for a period of the T310, the period of the T310 may be set to be short (for example, set to a period predefined in a protocol). Consequently, the terminal device initiates RRC connection release or re-establishment, and a probability that the terminal device cannot complete the network access procedure is high.

If the unavailability period is considered for a period of the T310, the period of the T310 is set to be longer than the period predefined in the protocol, to reduce the probability that the network access procedure cannot be completed because the terminal device initiates the RRC connection release or re-establishment due to timeout of the T310.

For example, the terminal device may determine, based on the indication information provided by the access network device, that the unavailability period needs to be considered when the period of the first timer is set. For example, the access network device sends, to the terminal device, information indicating that the terminal device is in a discontinuous availability scenario; or the terminal device determines that the terminal device accesses a discontinuous availability scenario.

It should be noted that when the first timer is the AS timer, the terminal device needs to obtain first period (namely, the discontinuous availability period of the access connection), and determine the period of the first timer based on the first period.

In a possible implementation, for a manner in which the terminal device obtains the first period, refer to the manner in which the terminal device obtains the first period in step S510. Details are not described herein again.

In another possible implementation, a manner in which the terminal device obtains the first period may be as follows: The terminal device estimates the first period based on a running cycle of the satellite (namely, the access network device accessed by the terminal device). For example, the running cycle of the satellite is a period #1, and the first period estimated by the terminal device is shorter than or equal to the period #1.

Further, after obtaining the first period, the terminal device determines the period of the first timer based on the first period. For example, the period of the first timer may be longer than or equal to a sum of the preset period of the first timer and the first period.

In addition, when the first timer is the AS timer, after the terminal device determines the period of the first timer, the terminal device controls RRC connection release or re-establishment based on the period of the first timer, instead of performing the foregoing step S530.

In this application,
for example, step S510 may be implemented in a manner 1 to a manner 4. Details are as follows.

Manner 1: Step S510 includes: The terminal device receives the unavailability period information from the access network device.

For ease of understanding, the manner 1 is described below in detail with reference to FIG. 6.

FIG. 6 is a diagram of obtaining unavailability period information by a terminal device according to an embodiment of this application.

S610: An access network device determines unavailability period information.

The access network device may be an access network device that serves the terminal device shown in FIG. 5, and the access network device may be located on a satellite or on the ground.

For related descriptions of the unavailability period information, refer to the descriptions of the unavailability period information in the embodiment shown in FIG. 5. Details are not described again.

In a possible implementation, the access network device determines the unavailability period information based on ephemeris information.

The ephemeris information may indicate or may be used to determine a discontinuous availability status of an access connection (or referred to as an availability status of the access connection).

Specifically, that the access network device determines information about a first period based on the ephemeris information may include: The access network device determines the information about the first period based on the discontinuous availability status of the access connection. The discontinuous availability status of the access connection may be determined based on conventional ephemeris information in the ephemeris information, or may be determined based on satellite availability information in the ephemeris information. This is not limited.

For example, that the access network device determines the information about the first period based on the ephemeris information includes: The access network device determines, based on the ephemeris information, one or more unavailability periods of one or more access connections corresponding to at least one reference point; and determines, based on the one or more unavailability periods of the one or more access connections corresponding to the at least one reference point, that the information about the first period is information about an unavailability period information of an access connection corresponding to a first reference point. The unavailability period of the access connection corresponding to the first reference point is a longest period of the one or more unavailability periods of the one or more access connections corresponding to the at least one reference point.

For ease of understanding, a specific manner in which the access network device determines the first period is described with reference to a specific example.

Example 1: The access network device determines the first period.

At a location #1 (or a reference point #1), a discontinuous availability period of an access connection is 5 hours (hours). At a location #2, a discontinuous availability period of an access connection is 6 hours.... At a location #n, a discontinuous availability period of an access connection is 7 hours.

In the case shown in the example 1, to enable the first period determined by the access network device to include the discontinuous availability periods of the access connections at the foregoing different locations, a value of the first period determined by the access network device is 7 hours. The first period may be understood as a longest discontinuous availability period of an access connection in discontinuous availability periods of a plurality of access connections respectively corresponding to a plurality of locations.

It should be noted that the foregoing example 1 is merely intended to provide a possible manner of determining the first period for ease of understanding, and does not constitute any limitation on the protection scope of this application. The first period may alternatively be determined in another manner. For example, the first period is an average value, a smallest value, a weighted average value, or the like of the one or more unavailability periods of the one or more access connections corresponding to the at least one reference point. Details are not described herein again.

For example, the ephemeris information indicates or is used to determine a discontinuous availability status of a feeder link (or referred to as an availability status of the feeder link). That the access network device determines information about a second period based on the ephemeris information includes: The access network device determines the information about the second period based on the discontinuous availability status of the feeder link. The discontinuous availability status of the feeder link may be determined based on the conventional ephemeris information and gateway station deployment information in the ephemeris information; or the discontinuous availability status of the feeder link may be determined based on the satellite availability information in the ephemeris information.

For example, that the access network device determines the information about the second period based on the ephemeris information includes: The access network device determines, based on the ephemeris information, one or more unavailability periods of one or more feeder links corresponding to the at least one reference point; and determines, based on the one or more unavailability periods of the one or more feeder links corresponding to the at least one reference point, that the information about the second period is information about an unavailability period of a feeder link corresponding to a second reference point, where the unavailability period of the feeder link corresponding to the second reference point is a longest period of the one or more unavailability periods of the one or more feeder links corresponding to the at least one reference point.

For ease of understanding, a specific manner in which the access network device determines the second period is described with reference to a specific example.

Example 2: The access network device determines the second period.

Three ground gateway stations (for example, a GW #1, a GW #2, and a GW #3) are deployed in a satellite constellation, and the GW#1, GW#2, and GW#3 respectively correspond to three locations (location). For example, the GW#1 corresponds to a GW-location #1, the GW #2 corresponds to a GW-location #2, and the GW#3 corresponds to a GW-location #3.

Specifically, a feeder link availability status of the GW#1 is that feeder link availability exists in 9:00-10:00 and 15:00-18:00, in other words, feeder link availability periods are respectively 1 hour (hour) and 3 hours, and a corresponding unavailability period of a feeder link is 20 hours. A feeder link availability status of the GW#2 is that feeder link availability exists in 11:00-12:30, in other words, a feeder link availability period is 1.5 hours, and a corresponding unavailability period of a feeder link is 22.5 hours. A feeder link availability status of the GW#3 is that feeder link availability exists in 13:00-14:00, in other words, a feeder link availability period is 2 hours, and a corresponding unavailability period of a feeder link is 22 hours.

In the case shown in the example 2, to enable the second period determined by the access network device to include the unavailability periods of the feeder links of the three gateway stations, a value of the second period determined by the access network device is 22.5 hours. The second period may be understood as a longest unavailability period of a feeder link in unavailability periods of a plurality of feeder links respectively corresponding to a plurality of gateway stations.

It should be noted that the foregoing example 2 is merely intended to provide a possible manner of determining the second period for ease of understanding, and does not constitute any limitation on the protection scope of this application. The second period may alternatively be determined in another manner. For example, the second period is an average value, a smallest value, a weighted average value, or the like of the one or more unavailability periods of the one or more access connections corresponding to the at least one reference point. Details are not described herein again.

S620: The access network device sends the unavailability period information to the terminal device.

In this embodiment, the unavailability period information includes the information about the first period and the information about the second period; or the unavailability period information includes information about a sum of the unavailability period of the access connection corresponding to the first reference point and the unavailability period of the feeder link corresponding to the second reference point. For related descriptions of the reference point, refer to the descriptions of the reference point in the embodiment shown in FIG. 5. Details are not described herein again.

In a possible implementation, step S620 includes: The access network device sends a broadcast message to the terminal device, where the broadcast message includes the unavailability period information, in other words, the access network device provides the unavailability period information to the terminal device in a broadcast manner.

In this implementation, the access network device may provide the unavailability period information to the terminal device before the terminal device requests to access a core network.

In another possible implementation, step S620 includes: The access network device sends an RRC connection reconfiguration message to the terminal device, where the RRC connection reconfiguration message includes the unavailability period information, in other words, the access network device provides the unavailability period information to the terminal device in an RRC connection establishment process.

In this implementation, the access network device may provide the unavailability period information to the terminal device after the terminal device initiates the network access request. For example, after the terminal device sends RRC establishment complete to the access network device, the access network device determines that there is a discontinuous availability scenario, in other words, there are/is discontinuous availability of an access connection and/or discontinuous availability of a feeder link. The access network device may provide the unavailability period information to the terminal device by using the RRC connection reconfiguration message.

In the manner in which the terminal device obtains the unavailability period information shown in FIG. 6, the terminal device may directly receive the unavailability period information from the access network device, and the access network device calculates the unavailability period information, so that an operation of the terminal device is simplified.

Manner 2: The unavailability period information includes the information about the first period and the information about the second period. Step S510 includes: The terminal device receives the information about the first period from the access network device, and the terminal device determines the information about the second period based on ephemeris information.

For ease of understanding, the manner 2 is described below in detail with reference to FIG. 7.

FIG. 7 is another diagram of obtaining unavailability period information by a terminal device according to an embodiment of this application.

S710: An access network device determines information about a first period.

For a manner in which the access network device determines the information about the first period, refer to the manner in which the access network device determines the information about the first period based on the ephemeris information in step S610. Details are not described again.

S720: The access network device sends the information about the first period to the terminal device.

In a possible implementation, step S720 includes: The access network device sends a broadcast message to the terminal device, where the broadcast message includes the information about the first period, in other words, the access network device provides the information about the first period to the terminal device in a broadcast manner.

In this implementation, the access network device may provide the information about the first period to the terminal device before the terminal device requests to access a core network.

In another possible implementation, step S720 includes: The access network device sends an RRC connection reconfiguration message to the terminal device, where the RRC connection reconfiguration message includes the information about the first period, in other words, the access network device provides the information about the first period to the terminal device in an RRC connection establishment process.

In this implementation, the access network device may provide the information about the first period to the terminal device after the terminal device initiates the network access request. For example, after the terminal device sends RRC establishment complete to the access network device, the access network device determines that there are discontinuous availability of an access connection and discontinuous availability of a feeder link, and the access network device may provide the information about the first period to the terminal device by using the RRC connection reconfiguration message.

S730: The terminal device obtains ephemeris information.

In a possible implementation, step S730 includes: The terminal device receives the ephemeris information from the access network device.

It should be understood that, when information about a second period is determined, the ephemeris information includes conventional ephemeris information and gateway station deployment information.

Optionally, the access network device sends a broadcast message to the terminal device, where the broadcast message includes the ephemeris information.

Optionally, the access network device sends an RRC connection reconfiguration message to the terminal device, where the RRC connection reconfiguration message includes the ephemeris information.

It may be understood that in this implementation, the access network device provides the information about the first period and the ephemeris information to the terminal device.

In another possible implementation, step S730 includes: The terminal device receives the ephemeris information from a core network device. Specifically, the terminal device receives an SMS message sent by the core network device, where the SMS message includes the ephemeris information.

In still another possible implementation, step S730 includes: The terminal device obtains the ephemeris information through a user plane. Specifically, the terminal device obtains the ephemeris information from a third-party application server through the user plane.

In still another possible implementation, step S730 includes: The terminal device is locally configured with the ephemeris information.

S740: The terminal device determines the information about the second period based on the ephemeris information.

For a manner in which the terminal device determines the information about the second period based on the ephemeris information, refer to the manner in which the access network device determines the information about the second period based on the ephemeris information in step S610. Details are not described herein again.

It should be noted that, in the embodiment shown in FIG. 7, the terminal device determines the information about the second period based on the obtained ephemeris information. As described above, the terminal device may determine the information about the second period based on the conventional ephemeris information and the gateway station deployment information in the ephemeris information, in other words, the ephemeris information obtained in step S730 includes the conventional ephemeris information and the gateway station deployment information.

In the manner in which the terminal device obtains the unavailability period information shown in FIG. 7, the terminal device may directly receive the information about the first period from the access network device, obtain the ephemeris information by itself, and determine the information about the second period based on the ephemeris information. The access network device and the terminal device separately determine the information about the first period and the information about the second period, so that operations of the access network device and the terminal device are simplified to some extent.

Manner 3: The unavailability period information includes the information about the first period and the information about the second period. Step S510 includes: The terminal device receives the information about the second period from the access network device, and the terminal device determines the information about the first period based on ephemeris information.

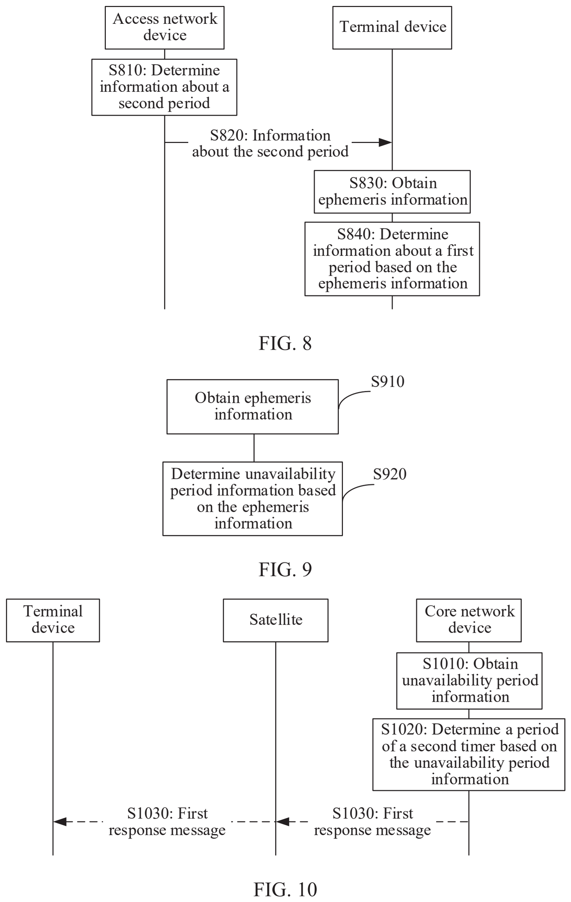

For ease of understanding, the manner 3 is described below in detail with reference to FIG. 8.

FIG. 8 is another diagram of obtaining unavailability period information by a terminal device according to an embodiment of this application.

S810: An access network device determines information about a second period.

For a manner in which the access network device determines the information about the second period, refer to the manner in which the access network device determines the information about the second period based on the ephemeris information in step S610. Details are not described again.

It should be understood that, when the information about the second period is determined, the ephemeris information may include conventional ephemeris information and gateway station deployment information.

S820: The access network device sends the information about the second period to the terminal device.

In a possible implementation, step S820 includes: The access network device sends a broadcast message to the terminal device, where the broadcast message includes the information about the second period, in other words, the access network device provides the information about the second period to the terminal device in a broadcast manner.

In this implementation, the access network device may provide the information about the second period to the terminal device before the terminal device requests to access a core network.

In another possible implementation, step S820 includes: The access network device sends an RRC connection reconfiguration message to the terminal device, where the RRC connection reconfiguration message includes the information about the second period, in other words, the access network device provides the information about the second period to the terminal device in an RRC connection establishment process.

In this implementation, the access network device may provide the information about the second period to the terminal device after the terminal device initiates the network access request. For example, after the terminal device sends RRC establishment complete to the access network device, the access network device determines that there are discontinuous availability of an access connection and discontinuous availability of a feeder link, and the access network device may provide the information about the second period to the terminal device by using the RRC connection reconfiguration message.

S830: The terminal device obtains ephemeris information.

For step S830, refer to related descriptions of step S730. Details are not described again.

It should be noted that in this embodiment, the ephemeris information obtained by the terminal device may be different from the ephemeris information obtained by the terminal device in step S730. For example, the ephemeris information may include conventional ephemeris information.

S840: The terminal device determines information about a first period based on the ephemeris information.

For S840, refer to related descriptions of determining, by the access network device, the information about the first period based on the ephemeris information in step S610. Details are not described again.

According to the method provided in the embodiment shown in FIG. 8, the terminal device may directly receive the information about the second period from the access network device, and the terminal device obtains the ephemeris information, and determines the information about the first period based on the ephemeris information. In other words, the access network device and the terminal device separately determine the information about the first period and the information about the second period, so that operations of the access network device and the terminal device are simplified to some extent.

Manner 4: Step S510 includes: The terminal device determines the unavailability period information based on ephemeris information.

For ease of understanding, the manner 4 is described below in detail with reference to FIG. 9.

FIG. 9 is another diagram of obtaining unavailability period information by a terminal device according to an embodiment of this application.

S910: The terminal device obtains ephemeris information.

For S910, refer to related descriptions of step S730 in the method shown in FIG. 7. Details are not described again.

S920: The terminal device determines unavailability period information based on the ephemeris information.

For example, for a manner in which the terminal device determines the unavailability period information based on the ephemeris information, refer to the manner in which the access network device determines the unavailability period information based on the ephemeris information in step S610. Details are not described herein again.

According to the method provided in the embodiment shown in FIG. 9, the terminal device may determine information about a first period and information about a second period, and an access network device does not need to determine the information about the first period and the information about the second period, so that an operation of the access network device is simplified.

FIG. 5 to FIG. 9 describe in detail how the terminal device obtains the unavailability period information when setting the period of the first timer, and sets the period of the first timer based on the unavailability period information, so that the terminal device sets an appropriate timing period.

This application further provides a communication method. When a terminal device accesses a core network device through a satellite, and the core network device indicates, after sending a first response message to the terminal device through the satellite, the terminal device to return a second response message in response to the first response message, the core network device may determine, based on a timeout status of a second timer, whether the first response message is successfully sent, and an unavailability period is considered for setting a period of the second timer. For ease of understanding, the following describes the communication method in detail with reference to FIG. 10.

FIG. 10 is a schematic flowchart of another communication method according to an embodiment of this application. The following steps are included.

S1010: A core network device obtains unavailability period information.

The unavailability period information may indicate a period in which a reference point is in unavailability of a satellite. The reference point may be understood as a location point such as a geographical location or a geographical area. For details, refer to related descriptions in the foregoing embodiment.

Optionally, the reference point includes a third reference point and a fourth reference point, the unavailability period information includes information about a third period and information about a fourth period, the third period is an unavailability period of an access connection corresponding to the third reference point, and the fourth period is an unavailability period of a feeder link corresponding to the fourth reference point; or the unavailability period information includes information about a sum of the unavailability period of the access connection corresponding to the third reference point and the unavailability period of the feeder link corresponding to the fourth reference point.

The third reference point and the fourth reference point may be the same or may be different.

For example, the third period may be the same as or different from the first period in the communication method shown in FIG. 5. Similarly, the fourth period may be the same as or different from the second period in the communication method shown in FIG. 5.

For example, the third reference point may be the same as or different from the first reference point in the communication method shown in FIG. 5. Similarly, the fourth reference point may be the same as or different from the second reference point in the communication method shown in FIG. 5.

For the reference point, refer to related descriptions in the communication method shown in FIG. 5. For example, the third reference point includes at least one of the following: a location of the core network device, a location of a second gateway station, an area in which the second gateway station is located, or an area in which the core network device is located. The fourth reference point includes at least one of the following: the location of the core network device, the location of the second gateway station, the area in which the second gateway station is located, or the area in which the core network device is located. The core network device is the foregoing core network device that obtains the unavailability period information.

The second gateway station may be a specified gateway station in at least one gateway station deployed in a satellite constellation. The second gateway station may be a gateway station associated with the core network device in at least one gateway station deployed in a specified satellite constellation. The location of the second gateway station or the area in which the second gateway station is located may be preconfigured.

In a possible implementation, step S1010 includes: The core network device receives the unavailability period information from an operations, administration and maintenance OAM device or a third party (for example, an application function AF entity).

In this implementation, the OAM device or the third party determines the unavailability period information based on ephemeris information, and sends the unavailability period information to the core network device. Specifically, for a manner of determining the unavailability period information, refer to the descriptions of determining the unavailability period information in step S610 in FIG. 6. Details are not described herein again.

In another possible implementation, step S1010 includes: The core network device determines the unavailability period information based on ephemeris information.

In this implementation, the core network device may receive the ephemeris information from an OAM device or a third party. Alternatively, the core network device is locally configured with the ephemeris information.

In this embodiment, for a specific manner in which the core network device determines the unavailability period information based on the ephemeris information, refer to the foregoing descriptions of determining, by the access network device and/or the terminal device, the unavailability period information based on the ephemeris information. A difference lies in that, when gateway station deployment (for example, the reference point is a location of a gateway station or an area in which the gateway station is located) is involved, ground gateway station deployment obtained by the core network device may be a subset of overall gateway station deployment. For example, the core network device obtains deployment of a gateway station that may be connected to the core network device. For example, a GW #1 and a GW #2 may be connected to the core network device, but a GW #3 is not connected to the core network device. In this case, the core network device may obtain deployment of the GW #1 and the GW #2.

It should be understood that, when the information about the fourth period is determined, the ephemeris information includes conventional ephemeris information and gateway station deployment information. The gateway station deployment information indicates a location of the at least one gateway station deployed in the satellite constellation, or the gateway station deployment information indicates a location of a gateway station that is in the at least one gateway station deployed in the satellite constellation and that is connected to the core network device.

For example, the core network device determines the information about the third period and the information about the fourth period based on the ephemeris information, where the third period is the unavailability period of the access connection corresponding to the third reference point, the fourth period is the unavailability period of the feeder link corresponding to the fourth reference point, and the unavailability period information includes the information about the third period and the information about the fourth period.

For example, that the core network device determines the information about the third period based on the ephemeris information (for example, based on the conventional ephemeris information or satellite availability information in the ephemeris information) includes: The core network device determines, based on the ephemeris information, one or more unavailability periods of one or more access connections corresponding to at least one reference point; and determines, based on the one or more unavailability periods of the one or more access connections corresponding to the at least one reference point, that the information about the third period is information about the unavailability period of the access connection corresponding to the third reference point, where the unavailability period of the access connection corresponding to the third reference point is a longest period of the one or more unavailability periods of the one or more access connections corresponding to the at least one reference point.

For example, that the core network device determines the information about the fourth period based on the ephemeris information (for example, based on the conventional ephemeris information and the gateway station deployment information, or satellite availability information in the ephemeris information) includes: The core network device determines, based on the ephemeris information, one or more unavailability periods of one or more feeder links corresponding to at least one reference point; and determines, based on the one or more unavailability periods of the one or more feeder links corresponding to the at least one reference point, that the information about the fourth period is information about the unavailability period of the feeder link corresponding to the fourth reference point, where the unavailability period of the feeder link corresponding to the fourth reference point is a longest period of the one or more unavailability periods of the one or more feeder links corresponding to the at least one reference point.

S1020: The core network device determines a period of a second timer based on the unavailability period information.

The second timer is used by the core network device to send a message to a terminal device through the satellite. In this embodiment, the second timer may be a timer, for example, T3550, defined in a 3GPP protocol. If the second timer is the T3550, the second timer may be a timer maintained by the core network device in a registration procedure.

In this embodiment, the second timer is maintained in the core network device, and is used by the core network device to send the message to the terminal device through the satellite. For example, the core network device may determine, based on a timeout status of the second timer, whether sending of the message to the terminal device succeeds or fails. For another example, a timeout status of the second timer is used by the core network device to determine an action that needs to be performed after the core network device sends the message to the terminal device through the satellite.

In this embodiment, the unavailability period is considered when the core network device sets the period of the second timer, to avoiding inappropriate setting of the period of the second timer.

In a possible implementation, in this embodiment, the core network device may determine, based on third indication information provided by the OAM device or the third party, that the period of the second timer may be determined based on the unavailability period. For example, before determining the period of the second timer based on the unavailability period information, the core network device receives third-party indication information from the OAM device or the third party, where the third-party indication information indicates the core network device to determine the period of the second timer based on the unavailability period, or indicates that the core network device is in a discontinuous availability scenario. The discontinuous availability scenario includes a discontinuous availability scenario of an access connection and/or a discontinuous availability scenario of a feeder link.

In a possible implementation, in this embodiment, the core network device may consider the unavailability period when determining the period of the second timer, or the core network device may determine that the core network device is in the discontinuous availability scenario without using the third indication information. For example, the core network device determines, based on satellite-related information (for example, information such as a satellite identifier or a satellite constellation feature), that the core network device is in the discontinuous availability scenario. The satellite-related information may be from the OAM device or the third-party device.

For example, the unavailability period information includes the information about the third period and the information about the fourth period, and step S1020 includes: The core network device determines the period of the second timer based on a preset period of the second timer, the information about the third period, and the information about the fourth period. The preset period of the second timer may be a period, of the second timer, predefined in a 3GPP protocol. This is not limited.

Optionally, the period of the second timer is longer than or equal to a sum of the preset period of the second timer, the third period, and the fourth period.

For example, if the second timer is a NAS timer T3550, the period of the second timer≥11s+the third period+the fourth period.

In this embodiment, before sending the message to the terminal device through the satellite, the core network device obtains the unavailability period information, and obtains, based on the unavailability period information, the period in which the reference point is in the unavailability of the satellite. In addition, when the period of the second timer is set, the period in which the reference point is in the unavailability of the satellite is considered, so that the core network device can determine, based on the second timer, whether sending of the message to the terminal device through the satellite succeeds or fails, to improve determining accuracy of the core network device.

Optionally, based on the foregoing embodiment, after step S1020, the method further includes:
S1030: The core network device sends a first response message to the terminal device through the satellite, and starts the second timer.

Specifically, the core network device starts the second timer when sending the first response message to the terminal device through the satellite.

The first response message is used to respond to a connection establishment request of the terminal device.

Further, after step S1030, the method may further include: If the core network device receives, before the second timer times out, a second response message that is from the terminal device and that is in response to the first response message, the core network device stops the second timer; and/or
if the core network device still does not receive, when the second timer times out, the second response message that is from the terminal device and that is in response to the first response message, the core network device terminates establishment of a connection to the terminal device.

Optionally, the first response message includes second indication information, and the second indication information indicates the terminal device to feed back, after receiving the first response message, the second response message in response to the first response message.

Optionally, the first response message is a registration accept message, and the second response message is a registration complete message. It should be understood that, when the first response message is the registration accept message, that the core network device determines that the first response message is successfully sent may be understood as that the terminal device determines that registration succeeds; otherwise, that the core network device determines that the first response message fails to be sent may be understood as that the terminal device determines that the registration fails.

In the embodiment shown in FIG. 10, when the terminal device accesses a core network through the satellite, the core network device sends the first response message to the terminal device through the satellite, starts the second timer, and determines, based on the timeout status of the second timer, whether the first response message is successfully sent. For example, if receiving the second response message from the terminal device before the second timer times out, the core network device determines that the first response message is successfully sent; otherwise, the core network device determines that the first response message fails to be sent, and may send the first response message again.

Because an availability status of the satellite changes with time and a location, in the embodiment shown in FIG. 10, when determining the period of the second timer, the core network device considers the discontinuous availability period of the access connection and the discontinuous availability period of the feeder link, to avoid a determining error of the core network device caused by an inappropriate period that is of the second timer and that is determined by the core network device.

It should be understood that sequence numbers of the foregoing processes do not mean execution sequences. The execution sequences of the processes should be determined based on functions and internal logic of the processes, and should not constitute any limitation on implementation processes of embodiments of this application.

It should be further understood that, in embodiments of this application, unless otherwise stated or there is a logic conflict, terms and/or descriptions in different embodiments are consistent and may be mutually referenced, and technical features in different embodiments may be combined into a new embodiment based on an internal logical relationship thereof.

It should be further understood that, in some of the foregoing embodiments, a device in an existing network architecture is mainly used as an example for description. It should be understood that, a specific form of the device is not limited in embodiments of this application. For example, all devices that can implement a same function in the future are applicable to embodiments of this application.

It may be understood that, in the foregoing method embodiments, a method and an operation implemented by a device (for example, the terminal device, the access network device, or the core network device) may alternatively be implemented by a component (for example, a chip or a circuit) that can be used in the device.

It may be further understood that in embodiments of this application, interaction between the terminal device, the access network device, and the core network device is mainly used as an example for description. This application is not limited thereto. A satellite may be replaced with a transmit-end device, and a terminal device may be replaced with a receive-end device.

It may be further understood that some optional features in embodiments of this application may be independent of other features in some scenarios, or may be combined with other features in some scenarios. This is not limited.

The communication methods provided in embodiments of this application are described in detail above with reference to FIG. 5 to FIG. 10. The foregoing communication method is mainly described from a perspective of interaction between the terminal device, the access network device, and the core network device. It may be understood that, to implement the foregoing functions, the terminal device, the access network device, and the core network device include hardware structures and/or software modules for performing the corresponding functions.

A person skilled in the art may be aware that, with reference to units and algorithm steps of the examples described in embodiments disclosed in this specification, this application can be implemented by hardware or a combination of hardware and computer software. Whether a function is performed by hardware or hardware driven by computer software depends on particular applications and design constraint conditions of the technical solutions. A person skilled in the art may use different methods to implement the described functions for each particular application, but the implementation still belongs to the scope of this application.

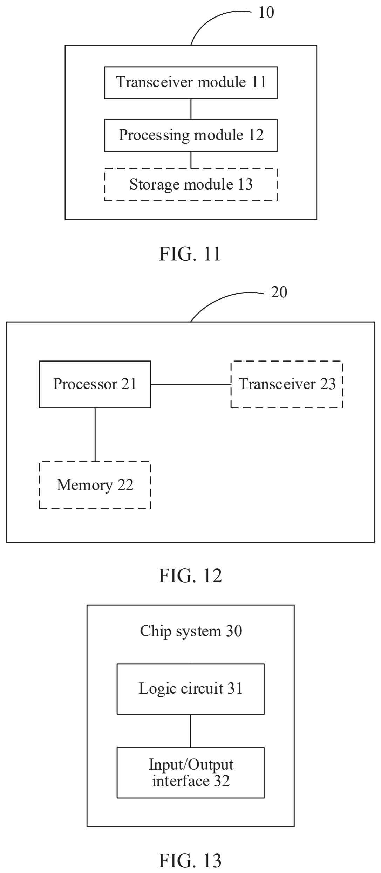

The communication apparatuses provided in embodiments of this application are described in detail below with reference to FIG. 11 to FIG. 13. It should be understood that descriptions of apparatus embodiments correspond to the descriptions of the method embodiments. Therefore, for content that is not described in detail, refer to the foregoing method embodiments. For brevity, details of a part of content are not described herein again.

In embodiments of this application, the terminal device, the access network device, and the core network device may be divided into functional modules based on the foregoing method examples. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, module division is an example, and is merely logical function division. During actual implementation, another division manner may be used. An example in which each functional module is obtained through division based on each corresponding function is used below for description.

FIG. 11 is a block diagram of a communication apparatus 10 according to an embodiment of this application. The apparatus 10 includes a transceiver module 11 and a processing module 12.

Optionally, the apparatus 10 may further include a storage module 13. The storage module 13 may be configured to store instructions and/or data. The processing module 12 may read the instructions and/or the data in the storage module, to cause the apparatus to implement actions of the device in the foregoing method embodiments.

In a possible design, the apparatus 10 may correspond to the terminal device in the foregoing method embodiments, or a component (for example, a chip) of the terminal device.

Correspondingly, the apparatus 10 may implement the steps or procedures performed by the terminal device in the foregoing method embodiments. Specifically, the transceiver module 11 may be configured to perform the sending and receiving related operations of the terminal device in the foregoing method embodiments. The processing module 12 may be configured to perform the processing-related operation of the terminal device in the foregoing method embodiments.

In a possible implementation, the transceiver module 11 is configured to obtain unavailability period information, where the unavailability period information indicates a period in which a reference point is in unavailability of a satellite; and the processing module 12 is configured to determine a period of a first timer based on the unavailability period information, where the first timer is used by the terminal device to send a message to a core network device through the satellite.

When the apparatus 10 is configured to perform the method in FIG. 5, the transceiver module 11 may be configured to perform steps of sending and receiving information in the method, for example, steps S510 and S530; and the processing module 12 may be configured to perform a processing step in the method, for example, step S520.

When the apparatus 10 is configured to perform the method in FIG. 6, the transceiver module 11 may be configured to perform steps of sending and receiving information in the method, for example, step S620; and the processing module 12 may be configured to perform a processing step in the method.

When the apparatus 10 is configured to perform the method in FIG. 7, the transceiver module 11 may be configured to perform steps of sending and receiving information in the method, for example, steps S720; and the processing module 12 may be configured to perform a processing step in the method, for example, step S730 and S740.

When the apparatus 10 is configured to perform the method in FIG. 8, the transceiver module 11 may be configured to perform steps of sending and receiving information in the method, for example, steps S820; and the processing module 12 may be configured to perform a processing step in the method, for example, step S830 and S840.

When the apparatus 10 is configured to perform the method in FIG. 9, the transceiver module 11 may be configured to perform steps of sending and receiving information in the method; and the processing module 12 may be configured to perform a processing step in the method, for example, step S910 and S920.

It should be understood that a specific process in which the units perform the foregoing corresponding steps is described in detail in the foregoing method embodiments. For brevity, details are not described herein again.

In another possible design, the apparatus 10 may correspond to the access network device in the foregoing method embodiment, or may be a component (for example, a chip) of the access network device.

Correspondingly, the apparatus 10 may implement the steps or procedures performed by the access network device in the foregoing method embodiments.

In a possible implementation, the processing module 12 is configured to determine unavailability period information based on ephemeris information, where the unavailability period information indicates a period in which a reference point is in unavailability of a satellite; and the transceiver module 11 is configured to send the unavailability period information to a terminal device.

When the apparatus 10 is configured to perform the method in FIG. 6, the transceiver module 11 may be configured to perform steps of sending and receiving information in the method, for example, step S620; and the processing module 12 may be configured to perform a processing step in the method, for example, step S610.

When the apparatus 10 is configured to perform the method in FIG. 7, the transceiver module 11 may be configured to perform steps of sending and receiving information in the method, for example, step S720; and the processing module 12 may be configured to perform a processing step in the method, for example, step S710.

When the apparatus 10 is configured to perform the method in FIG. 8, the transceiver module 11 may be configured to perform steps of sending and receiving information in the method, for example, step S820; and the processing module 12 may be configured to perform a processing step in the method, for example, step S810.

It should be understood that a specific process in which the units perform the foregoing corresponding steps is described in detail in the foregoing method embodiments. For brevity, details are not described herein again.

In still another possible design, the apparatus 10 may correspond to the core network device in the foregoing method embodiment, or may be a component (for example, a chip) of the core network device.

Correspondingly, the apparatus 10 may implement the steps or procedures performed by the core network device in the foregoing method embodiments.

In a possible implementation, the transceiver module 11 is configured to obtain unavailability period information, where the unavailability period information indicates a period in which a reference point is in unavailability of a satellite; and the processing module 12 is configured to determine a period of a second timer based on the unavailability period information, where the second timer is used by the core network device to send a message to a terminal device through the satellite.

When the apparatus 10 is configured to perform the method in FIG. 10, the transceiver module 11 may be configured to perform steps of sending and receiving information in the method, for example, step S1030; and the processing module 12 may be configured to perform a processing step in the method, for example, step S1010 and S1020.

It should be understood that a specific process in which the units perform the foregoing corresponding steps is described in detail in the foregoing method embodiments. For brevity, details are not described herein again.

It should be further understood that the apparatus 10 herein is embodied in a form of a functional module. The term "module" herein may be an application-specific integrated circuit (application-specific integrated circuit, ASIC), an electronic circuit, a processor (for example, a shared processor, a dedicated processor, or a group processor) configured to execute one or more software or firmware programs, a memory, a combinational logic circuit, and/or another suitable component that supports the described function. In an optional example, a person skilled in the art may understand that the apparatus 10 may be specifically the core network device in the foregoing embodiments, and may be configured to perform the procedures and/or steps corresponding to the core network device in the foregoing method embodiments. Alternatively, the apparatus 10 may be specifically the terminal device in the foregoing embodiments, and may be configured to perform the procedures and/or steps corresponding to the terminal device in the foregoing method embodiments. To avoid repetition, details are not described herein again.

The apparatus 10 in the foregoing solutions has functions of implementing corresponding steps performed by the device in the foregoing methods. The function may be implemented by hardware, or may be implemented by hardware executing corresponding software. The hardware or the software includes one or more modules corresponding to the foregoing function. For example, the transceiver module may be replaced with a transceiver (for example, a sending unit in the transceiver module may be replaced with a transmitter, and a receiving unit in the transceiver module may be replaced with a receiver), and another unit, for example, the processing module, may be replaced with a processor, to respectively perform sending and receiving operations and processing-related operations in the method embodiments.

In addition, the transceiver module 11 may alternatively be a transceiver circuit (for example, may include a receiving circuit and a sending circuit), and the processing module may be a processing circuit.

FIG. 12 is another diagram of a communication apparatus 20 according to an embodiment of this application. The apparatus 20 includes a processor 21. The processor 21 is configured to execute a computer program or instructions stored in a memory 22, or read data/signaling stored in the memory 22, to perform the method performed by the terminal device, the access network device, or the core network device in the foregoing method embodiments.

There may be one or more processors 21.

As shown in FIG. 12, the apparatus 20 may further include the memory 22. The memory 22 is configured to store the computer program or the instructions and/or the data. The memory 22 and the processor 21 may be integrated together, or may be separately disposed. The memory 22 may be one or more memories.

As shown in FIG. 12, the apparatus 20 may further include a transceiver 23. The transceiver 23 is configured to: receive and/or send a signal. For example, the processor 21 is configured to control the transceiver 23 to receive and/or send a signal.

The processor may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

The memory may be a volatile memory and/or a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. By way of example, but not limitation, the RAM includes a plurality of forms, such as a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that when the processor is a general-purpose processor, a DSP, an ASIC, an FPGA or another programmable logic device, a discrete gate or a transistor logic device, or a discrete hardware component, the memory (storage module) may be integrated into the processor.

FIG. 13 is a diagram of a chip system 30 according to an embodiment of this application. The chip system 30 (or may be referred to as a processing system) includes a logic circuit 31 and an input/output interface (input/output interface) 32.

The logic circuit 31 may be a processing circuit in the chip system 30. The logic circuit 31 may be coupled to a storage unit, and invoke instructions in the storage unit, so that the chip system 30 can implement the methods and functions in embodiments of this application. The input/output interface 32 may be an input/output circuit in the chip system 30, and outputs information processed by the chip system 30, or inputs to-be-processed data or signaling information into the chip system 30 for processing.

In a solution, the chip system 30 is configured to implement the operations performed by the terminal device, the access network device, or the core network device in the foregoing method embodiments.

For example, the logic circuit 31 is configured to implement processing-related operations performed by the terminal device, the access network device, and the core network device in the foregoing method embodiments, and the input/output interface 32 is configured to implement sending and/or receiving related operations performed by the terminal device, the access network device, and the core network device in the foregoing method embodiments.

This application further provides a communication apparatus, including a processor. The processor is coupled to a memory. The memory is configured to store a computer program or instructions and/or data. The processor is configured to execute the computer program or the instructions stored in the memory, or read data stored in the memory, to perform the method performed by the terminal device, the access network device, or the core network device in the foregoing method embodiments.

Optionally, there are one or more processors. There are one or more memories.

Optionally, the communication apparatus includes the memory. Optionally, the memory and the processor are integrated together or disposed separately.

This application provides a computer-readable storage medium. The computer-readable storage medium stores computer instructions. When the computer instructions are executed, the method performed by the terminal device, the access network device, or the core network device in the foregoing method embodiments is implemented.

This application provides a computer program product, including instructions. When the instructions are executed by a computer, the method performed by the terminal device, the access network device, or the core network device in the foregoing method embodiments is implemented.

This application provides a communication system. The communication system includes the terminal device and the access network device in the foregoing embodiments.

This application further provides a communication system. The communication system includes at least one of the terminal device, the access network device, and the core network device in the foregoing embodiments.

For explanations and beneficial effect of related content of any one of the apparatuses provided above, refer to the corresponding method embodiment provided above. Details are not described herein again.

It may be understood that, the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor or any conventional processor or the like.

The method steps in embodiments of this application may be implemented by hardware, or may be implemented by the processor by executing software instructions. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk drive, a removable hard disk, a compact disc read-only memory (compact disc read-only memory, CD-ROM), or any other form of storage medium well-known in the art. For example, a storage medium is coupled to the processor, so that the processor can read information from the storage medium and write information into the storage medium. Certainly, the storage medium may be a component of the processor. The processor and the storage medium may be disposed in an ASIC. In addition, the ASIC may be located in a core network device, an access network device, an access and mobility management function network element, a terminal, a session management function, or a multicast user plane function network element. Certainly, the processor and the storage medium may alternatively exist in a core network device, an access network device, an access and mobility management function network element, a terminal, a session management function, or a multicast user plane function network element as discrete components.

All or some of the foregoing embodiments may be implemented by software, hardware, firmware, or any combination thereof. When software is used to implement the embodiments, all or a part of the embodiments may be implemented in a form of a computer program product. The computer program product includes one or more computer programs or instructions. When the computer programs or the instructions are loaded and executed on a computer, a part of all of the procedures or functions in embodiments of this application are performed. The computer may be a general-purpose computer, a dedicated computer, a computer network, a network device, a user equipment, or another programmable apparatus. The computer program or instructions may be stored in a computer-readable storage medium, or may be transmitted from a computer-readable storage medium to another computer-readable storage medium. For example, the computer program or instructions may be transmitted from a website, computer, server, or data center to another website, computer, server, or data center in a wired or wireless manner. The computer-readable storage medium may be any usable medium that can be accessed by a computer, or a data storage device, for example, a server or a data center, integrating one or more usable media. The usable medium may be a magnetic medium, for example, a floppy disk, a hard disk, or a magnetic tape; may be an optical medium, for example, a digital video disc; or may be a semiconductor medium, for example, a solid-state drive.

In embodiments of this application, unless otherwise stated or there is a logic conflict, terms and/or descriptions in different embodiments are consistent and may be mutually referenced, and technical features in different embodiments may be combined into a new embodiment based on an internal logical relationship thereof.

It may be understood that various numeric numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

Unless otherwise stated, meanings of all technical and scientific terms used in embodiments of this application are the same as those usually understood by a person skilled in the technical field of this application. The terms used in this application are merely intended to describe objectives of the specific embodiments, and are not intended to limit the scope of this application. It should be understood that the foregoing descriptions are examples for description, and the foregoing examples are merely intended to help a person skilled in the art understand embodiments of this application, but are not intended to limit embodiments of this application to examples of specific values or specific scenarios. It is clear that a person skilled in the art can make various equivalent modifications or variations based on the examples described above, and such modifications and variations also fall within the scope of embodiments of this application.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, wherein the method is applied to a terminal device or a chip in the terminal device, and the method comprises:
obtaining unavailability period information, wherein the unavailability period information indicates a period in which a reference point is in unavailability of a satellite; and
determining a period of a first timer based on the unavailability period information, wherein the first timer is used by the terminal device to send a message to a core network device through the satellite.

2. The method according to claim 1, wherein the reference point comprises a first reference point and a second reference point; and
the unavailability period information comprises information about a first period and information about a second period, the first period is an unavailability period of an access connection corresponding to the first reference point, and the second period is an unavailability period of a feeder link corresponding to the second reference point; or
the unavailability period information comprises information about a sum of an unavailability period of an access connection corresponding to the first reference point and an unavailability period of a feeder link corresponding to the second reference point.

3. The method according to claim 2, wherein the determining the period of the first timer based on the unavailability period information comprises:
determining the period of the first timer based on a preset period of the first timer, the information about the first period, and the information about the second period.

4. The method according to claim 3, wherein the period of the first timer is longer than or equal to a sum of the preset period of the first timer, the first period, and the second period.

5. The method according to any one of claims 2 to 4, wherein the first reference point and the second reference point are the same, or the first reference point and the second reference point are different.

6. The method according to any one of claims 2 to 5, wherein the first reference point comprises at least one of the following: a location of the terminal device, a location of a first gateway station, an area in which the first gateway station is located, or an area in which the terminal device is located; and
the second reference point comprises at least one of the following:
the location of the terminal device, the location of the first gateway station, the area in which the first gateway station is located, or the area in which the terminal device is located.

7. The method according to any one of claims 1 to 6, wherein the obtaining the unavailability period information comprises:
receiving the unavailability period information from an access network device of the terminal device.

8. The method according to claim 7, wherein the receiving the unavailability period information from the access network device of the terminal device comprises:
receiving a broadcast message from the access network device, wherein the broadcast message comprises the unavailability period information; and
receiving a radio resource control RRC reconfiguration message from the access network device, wherein the RRC reconfiguration message comprises the unavailability period information.

9. The method according to any one of claims 1 to 6, wherein the obtaining the unavailability period information comprises:
determining the unavailability period information based on ephemeris information.

10. The method according to claim 9, wherein the determining the unavailability period information based on the ephemeris information comprises:
determining the information about the first period and the information about the second period based on the ephemeris information, wherein the first period is the unavailability period of the access connection corresponding to the first reference point, and the second period is the unavailability period of the feeder link corresponding to the second reference point, wherein
the unavailability period information comprises the information about the first period and the information about the second period.

11. The method according to any one of claims 1 to 6, wherein the obtaining the unavailability period information comprises:
receiving the information about the second period from an access network device of the terminal device, wherein the second period is the unavailability period of the feeder link corresponding to the second reference point; and
determining the information about the first period based on ephemeris information, wherein the first period is the unavailability period of the access connection corresponding to the first reference point, wherein
the unavailability period information comprises the information about the first period and the information about the second period.

12. The method according to any one of claims 1 to 6, wherein the obtaining the unavailability period information comprises:
receiving the information about the first period from an access network device of the terminal device, wherein the first period is the unavailability period of the access connection corresponding to the first reference point; and
determining the information about the second period based on ephemeris information, wherein the second period is the unavailability period of the feeder link corresponding to the second reference point, wherein
the unavailability period information comprises the information about the first period and the information about the second period.

13. The method according to claim 10 or 11, wherein the determining the information about the first period based on the ephemeris information comprises:
determining, based on the ephemeris information, one or more unavailability periods of one or more access connections corresponding to at least one reference point; and
determining, based on the one or more unavailability periods of the one or more access connections corresponding to the at least one reference point, that the information about the first period is information about the unavailability period of the access connection corresponding to the first reference point, wherein the unavailability period of the access connection corresponding to the first reference point is a longest period of the one or more unavailability periods of the one or more access connections corresponding to the at least one reference point.

14. The method according to claim 9 or 12, wherein the determining the information about the second period based on the ephemeris information comprises:
determining, based on the ephemeris information, one or more unavailability periods of one or more feeder links corresponding to at least one reference point; and
determining, based on the one or more unavailability periods of the one or more feeder links corresponding to the at least one reference point, that the information about the second period is information about the unavailability period of the feeder link corresponding to the second reference point, wherein the unavailability period of the feeder link corresponding to the second reference point is a longest period of the one or more unavailability periods of the one or more feeder links corresponding to the at least one reference point.

15. The method according to any one of claims 7 to 14, wherein the method further comprises:
receiving the ephemeris information from the access network device of the terminal device;
receiving the ephemeris information from the core network device; or
obtaining the ephemeris information through a user plane.

16. The method according to claim 15, wherein the receiving the ephemeris information from the access network device comprises:
receiving a broadcast message from the access network device of the terminal device, wherein the broadcast message comprises the ephemeris information; or
receiving a radio connection resource RRC reconfiguration message from the access network device of the terminal device, wherein the RRC reconfiguration message comprises the ephemeris information.

17. The method according to any one of claims 1 to 16, wherein before the determining the period of the first timer based on the unavailability period information, the method further comprises:
receiving first indication information from the access network device of the terminal device, wherein
the first indication information indicates the terminal device to determine the period of the first timer based on the unavailability period, or indicates that the terminal device is in a discontinuous availability scenario.

18. The method according to any one of claims 1 to 17, wherein the method further comprises:
when the terminal device sends a first request message to the core network device through the satellite, starting the first timer, wherein the first request message is used to request to establish a connection to the core network device; and
if a first response message in response to the first request message is received from the core network device before the first timer times out, stopping the first timer; and/or
if the first response message in response to the first request message is still not received from the core network device when the first timer times out, terminating the establishment of the connection to the core network device.

19. The method according to claim 18, wherein the first request message is a registration request message, and the first response message is a registration accept message; or
the first request message is a service request message, and the first response message is a service accept message.

20. A communication method, wherein the method is applied to an access network device or a chip in the access network device, and the method comprises:
determining unavailability period information based on ephemeris information, wherein the unavailability period information indicates a period in which a reference point is in unavailability of a satellite; and
sending the unavailability period information to a terminal device.

21. The method according to claim 20, wherein the reference point comprises a first reference point and a second reference point; and
the unavailability period information comprises information about a first period and information about a second period, the first period is an unavailability period of an access connection corresponding to the first reference point, and the second period is an unavailability period of a feeder link corresponding to the second reference point; or
the unavailability period information comprises information about a sum of an unavailability period of an access connection corresponding to the first reference point and an unavailability period of a feeder link corresponding to the second reference point.

22. The method according to claim 21, wherein the first reference point and the second reference point are the same, or the first reference point and the second reference point are different.

23. The method according to claim 21 or 22, wherein the first reference point comprises at least one of the following: a location of the terminal device, a location of a first gateway station, an area in which the first gateway station is located, or an area in which the terminal device is located; and
the second reference point comprises at least one of the following:
the location of the terminal device, the location of the first gateway station, the area in which the first gateway station is located, or the area in which the terminal device is located.

24. The method according to any one of claims 20 to 23, wherein the sending the unavailability period information to the terminal device comprises:
sending a broadcast message to the terminal device, wherein the broadcast message comprises the unavailability period information; and
sending a radio connection resource RRC reconfiguration message to the terminal device, wherein the RRC reconfiguration message comprises the unavailability period information.

25. The method according to any one of claims 20 to 24, wherein the determining the unavailability period information based on the ephemeris information comprises:
determining the information about the first period based on the ephemeris information, wherein the first period is the unavailability period of the access connection corresponding to the first reference point.

26. The method according to claim 25, wherein the determining the information about the first period based on the ephemeris information comprises:
determining, based on the ephemeris information, one or more unavailability periods of one or more access connections corresponding to at least one reference point; and
determining, based on the one or more unavailability periods of the one or more access connections corresponding to the at least one reference point, that the information about the first period is information about the unavailability period of the access connection corresponding to the first reference point, wherein the unavailability period of the access connection corresponding to the first reference point is a longest period of the one or more unavailability periods of the one or more access connections corresponding to the at least one reference point.

27. The method according to any one of claims 20 to 26, wherein the determining the unavailability period information based on the ephemeris information comprises:
determining the information about the second period based on the ephemeris information, wherein the second period is the unavailability period of the feeder link corresponding to the second reference point.

28. The method according to claim 27, wherein the determining the information about the second period based on the ephemeris information comprises:
determining, based on the ephemeris information, one or more unavailability periods of one or more feeder links corresponding to the at least one reference point; and
determining, based on the one or more unavailability periods of the one or more feeder links corresponding to the at least one reference point, that the information about the second period is information about the unavailability period of the feeder link corresponding to the second reference point, wherein the unavailability period of the feeder link corresponding to the second reference point is a longest period of the one or more unavailability periods of the one or more feeder links corresponding to the at least one reference point.

29. The method according to any one of claims 20 to 27, wherein the method further comprises:
sending first indication information to the terminal device, wherein
the first indication information indicates the terminal device to determine a period of a first timer based on the unavailability period, or indicates that the terminal device is in a discontinuous availability scenario.

30. A communication apparatus, comprising:
a processor, configured to execute a computer program stored in a memory, to cause the apparatus to perform the method according to any one of claims 1 to 29.

31. The apparatus according to claim 30, wherein the apparatus further comprises the memory.

32. A computer-readable storage medium, wherein the computer-readable storage medium stores a computer program; and when the computer program is run on a computer, the computer is caused to perform the method according to any one of claims 1 to 29.

33. A computer program product, wherein the computer program product comprises instructions for performing the method according to any one of claims 1 to 29.

34. A communication system, comprising a terminal device and an access network device, wherein
the terminal device is configured to perform the method according to any one of claims 1 to 19; and
the access network device is configured to perform the method according to any one of claims 20 to 29.
